# EUROPEAN PATENT APPLICATION

(11) **EP 4 769 160 A1**
(43) Date of publication of application: **01.07.2026**
(21) Application number: 24867003.6
(22) Date of filing: 02.07.2024
(51) Int. Cl.: G06F 12/1027

(54) **CACHING METHOD AND APPARATUS FOR MEMORY PAGE TABLE, STORAGE MEDIUM, AND COMPUTER PROGRAM PRODUCT**

(30) Priority: 21.09.2023 CN 202311230459
(71) Applicant: HUAWEI TECHNOLOGIES CO., LTD., Shenzhen, Guangdong 518129 (CN)
(72) Inventor: LEE, Wei Jian, Shenzhen, Guangdong 518129 (CN); LIN, Yue, Shenzhen, Guangdong 518129 (CN); PAN, Wei, Shenzhen, Guangdong 518129 (CN); WU, Pingyu, Shenzhen, Guangdong 518129 (CN)
(74) Representative: Goddar, Heinz J.
(86) International application number: PCT/CN2024/103209
(87) International publication number: WO 2025/060584

(57) **Abstract**

This application discloses a memory page table caching method and apparatus, a storage medium, and a computer program product, relating to the field of computer technologies. The method includes: A process applies for a memory page with a specific size as required, where the size of the memory page that is applied for is not limited to a page size of an any-level page table. Correspondingly, a compute device can create, based on the request of the process, a memory page with a corresponding size for the process by merging page table entries, and store, in a page table cache, a cache table entry obtained through merging. To be specific, a large memory page is actively created for the process from a source by merging the page table entries, so that a cache table entry in the page table cache can cover a plurality of page table entries in a memory page table, to increase a hit rate of the page table cache, reduce page table walks, and reduce memory access latency and memory access overheads.

## Description

This application claims priority to Chinese Patent Application No. 202311230459.6, filed on September 21, 2023 and entitled "MEMORY PAGE TABLE CACHING METHOD AND APPARATUS, STORAGE MEDIUM, AND COMPUTER PROGRAM PRODUCT", which is incorporated herein by reference in its entirety.

### TECHNICAL FIELD

This application relates to the field of computer technologies, and in particular, to a memory page table caching method and apparatus, a storage medium, and a computer program product.

### BACKGROUND

During memory access, processors mostly use virtual addresses (virtual address, VA) for memory addressing. Using virtual addresses can create an addressing space much greater than that created by using actual physical addresses (physical address, PA). In the process of memory addressing using virtual addresses, the virtual addresses need to be translated into physical addresses, and then memory access is performed based on the physical addresses.

The virtual address includes a virtual page number (virtual page number, VPN) and an offset (offset), and the physical address includes a physical page number (physical page number, PPN) and an offset. One virtual page number corresponds to one physical page number, and one physical page number indicates one physical page. In addition, the offset in the virtual address is the same as the offset in the physical address.

In related technologies, a translation lookaside buffer (translation lookaside buffer, TLB) includes a plurality of cache table entries. The TLB is also referred to as a page table cache, and the cache table entry is also referred to as an entry (entry). Each cache table entry is used to store a mapping relationship between one virtual page number and one physical page number. During translation from a virtual address into a physical address, a physical page number corresponding to a virtual page number in the virtual address is first looked up in the TLB. If the lookup succeeds (TLB hit), the physical address is determined based on the found physical page number and an offset in the virtual address. If the lookup fails (TLB miss), a page table (page table, PT) is then read from a memory, the physical page number corresponding to the virtual page number in the virtual address is looked up in each page table entry (page table entry, PTE) in the page table, to determine the physical address, and a found mapping relationship is stored as a cache table entry in the TLB. This process is also referred to as a page table walk (page table walk, PTW). Each page table entry indicates a mapping relationship between one virtual page number and one physical page number.

However, a cache table entry in the TLB stores only a mapping relationship between one virtual page number and one physical page number, a storage space of the TLB is limited, and a quantity of page table entries in the page table is far larger than a quantity of cache table entries in the TLB. Consequently, a physical page that can be covered by the mapping relationship stored in the TLB is limited, causing a low TLB hit rate. Because the PTW needs to be performed when the TLB miss occurs, and PTW is time consuming, making memory access latency and memory access overheads increased. Therefore, how to increase the TLB hit rate becomes a major concern currently.

### SUMMARY

This application provides a memory page table caching method and apparatus, a storage medium, and a computer program product, to increase physical memory capacities covered by entries in a page table cache, so as to increase a hit rate of the page table cache, reduce page table walks, and reduce memory access latency and memory access overheads. The technical solutions are as follows.

According to a first aspect, a memory page table caching method is provided. The method includes: obtaining a memory request of a target process, where the memory request indicates a target page size, the target page size is greater than a page size of a first-level page table and is less than a page size of a second-level page table, and the first-level page table and the second-level page table are two consecutive levels of page tables; allocating N consecutive virtual page numbers and N consecutive physical page numbers to the target process in response to the memory request, where N is not less than a quantity of memory pages required by the target process; creating N page table entries in a memory page table based on the N physical page numbers and the N virtual page numbers, where the N page table entries represent a mapping relationship between the N virtual page numbers and N base pages, the N base pages are N physical pages that are in one-to-one correspondence with the N physical page numbers, and a size of the base page is equal to the page size of the first-level page table; and merging the N page table entries into a first cache table entry, and storing the first cache table entry in a page table cache.

A large memory page is actively created for the process from a source by merging the page table entries, so that a cache table entry in the page table cache can cover a plurality of page table entries in a memory page table, to increase a hit rate of the page table cache, reduce page table walks, and reduce memory access latency and memory access overheads. A manner of actively creating the large page can significantly increase a quantity of large pages, to increase cache table entries obtained through merging, and significantly increase the hit rate of the page table cache.

The allocating the N consecutive virtual page numbers and the N consecutive physical page numbers to the target process includes: determining a value of N based on the target page size and the size of the base page; determining the N consecutive physical page numbers from unused physical page numbers based on the value of N, and determining the N consecutive virtual page numbers based on an unused virtual address space; and allocating the determined N physical page numbers and N virtual page numbers to the target process.

Optionally, the creating the N page table entries in the memory page table based on the N physical page numbers and the N virtual page numbers includes: determining a smallest physical page number in the N physical page numbers as a base physical page number; generating a reference physical page number based on the base physical page number; and creating the N page table entries in the memory page table, where each of the N page table entries includes one of the N virtual page numbers, the reference physical page number, and a tag bit, and the tag bit indicates that a corresponding page table entry is a mergeable entry.

For ease of implementing forward and reverse translation between page numbers and improve performance, it may be limited that N=2^{x}, x is a positive integer, and the base physical page number is exactly divisible by N. This may serve as a condition for merging page table entries. The generating the reference physical page number based on the base physical page number includes: determining that, in the reference physical page number, values of an x^{th}-to-last bit to a leftmost bit are equal to values of an x^{th}-to-last bit to a leftmost bit in the base physical page number, values of a 0^{th}-to-last bit to an (x-2)^{th}-to-last bit are all a first value, and a value of an (x-1)^{th}-to-last bit is a second value.

Considering that if read/write attributes of pages are different, even if merging is performed, read/write performance of the process on a memory is affected after merging. Therefore, to ensure performance of merging page table entries, a merging condition of the page table entries further includes that the read/write attributes of the pages are the same. For example, read/write attributes of the N base pages are the same.

The merging the N page table entries into the first cache table entry includes: obtaining a memory access request of the target process, where the memory access request includes a target virtual page number, and the target virtual page number is one of the N virtual page numbers; and merging the N page table entries into the first cache table entry during determining of a target physical page number corresponding to the target virtual page number.

It can be learned from the foregoing descriptions that each of the N page table entries includes one of the N virtual page numbers, the N page table entries each further include a same reference physical page number, the reference physical page number is generated based on the base physical page number, and the base physical page number is the smallest physical page number in the N physical page numbers. The merging the N page table entries into the first cache table entry during determining of the target physical page number corresponding to the target virtual page number includes: during determining of the target physical page number corresponding to the target virtual page number, looking up, from the memory page table, a page table entry in which the target virtual page number is included, to obtain a first page table entry; if the first page table entry is a merged entry, determining a target parameter value based on the first page table entry, where the target parameter value indicates the value of N; generating a merged virtual page number based on the target parameter value and the target virtual page number, and determining the base physical page number based on the reference physical page number in the first page table entry; and generating the first cache table entry, where the first cache table entry includes the merged virtual page number, the base physical page number, and a tag bit, and the tag bit in the first cache table entry indicates that the first cache table entry is a merged entry.

The N page table entries each further include a tag bit whose value is the first value, the value of the (x-1)^{th}-to-last bit in the reference physical page number is the second value, and the values of the 0^{th}-to-last bit to the (x-2)^{th}-to-last bit are all the first value, where N=2^{x}, x is a positive integer, and x represents the target parameter value. The determining the target parameter value based on the first page table entry includes: counting, starting from a rightmost bit of a first binary character string to left, a quantity of bits whose values are the first value, until a 1^{st} bit of a non-first value from right to left in the first binary character string is counted, to obtain the target parameter value, where the first binary character string is a binary character string obtained by concatenating an end of the reference physical page number and the tag bit.

It can be learned that, when N=2^{x}, and both the base physical page number and the base virtual page number are exactly divisible by N, if a value of the tag bit and the values of the 0^{th}-to-last bit to the (x-2)^{th}-to-last bit in the reference physical page number are all the first value, a processor does not need to waste an additional storage space to record a quantity N of to-be-merged entries and/or the parameter value x. Subsequently, the value of x can be determined by counting a quantity of bits that are of the first value and that are in a low-order bit of a first binary character string, and the value of N can be known by knowing the value of x. That is, such a design can not only implement forward and reverse translation between page numbers, but also does not need to waste additional storage space.

Correspondingly, the generating the merged virtual page number based on the target parameter value and the target virtual page number includes: determining that, in the merged virtual page number, values of an x^{th}-to-last bit to a leftmost bit are equal to values of an x^{th}-to-last bit to a leftmost bit in the target virtual page number, values of a 0^{th}-to-last bit to an (x-2)^{th}-to-last bit are all the first value, and a value of an (x-1)^{th}-to-last bit is the second value. The determining the base physical page number based on the reference physical page number in the first page table entry includes: determining that the values of the x^{th}-to-last bit to the leftmost bit in the base physical page number are equal to the values of the x^{th}-to-last bit to the leftmost bit in the reference physical page number, and values of a 0^{th}-to-last bit to an (x-1)^{th}-to-last bit are all the first value.

After the determining the base physical page number based on the reference physical page number in the first page table entry, the method further includes: determining a base virtual page number based on the target parameter value and the target virtual page number, where the base virtual page number is a smallest virtual page number in the N virtual page numbers; and determining the target physical page number based on the base physical page number, the target virtual page number, and the base virtual page number, that is, translating a real physical page number.

It should be understood that before the looking up, from the memory page table, the page table entry in which the target virtual page number is included, the method further includes: querying the page table cache based on the target virtual page number, to determine whether the target virtual page number is found in the page table cache; and if the target virtual page number is not found in the page table cache, performing a step of the looking up, from the memory page table, the page table entry in which the target virtual page number is included.

The querying the page table cache based on the target virtual page number, to determine whether the target virtual page number is found in the page table cache includes: querying, from the page table cache, the page table entry in which the target virtual page number is included; if the page table entry in which the target virtual page number is included is not found in the page table cache, determining a plurality of candidate virtual page numbers based on a merging threshold and the target virtual page number, where the merging threshold indicates a maximum quantity of page table entries that can be merged in one merge; querying whether a page table entry corresponding to a first candidate virtual page number exists in the page table cache, where the first candidate virtual page number is any one of the plurality of candidate virtual page numbers; and if the page table entry corresponding to the first candidate virtual page number does not exist in the page table cache, determining that the target virtual page number is not found in the page table cache.

Optionally, the determining the plurality of candidate virtual page numbers based on the merging threshold and the target virtual page number includes: determining that values of a j^{th}-to-last bit to a leftmost bit in a j^{th} candidate virtual page number included in the plurality of candidate virtual page numbers are equal to values of a j^{th}-to-last bit to the leftmost bit in the target virtual page number, where j∈[1, X], and X represents the merging threshold; and when j>1, determining that values of a 0th-to-last bit to a (j-2)^{th}-to-last bit in the j^{th} candidate virtual page number are all a first value, and a value of a (j-1)^{th}-to-last bit is a second value; or when j=1, determining that a value of a (j-1)^{th}-to-last bit in the j^{th} candidate virtual page number is a second value.

It should be understood that, during address translation, if the page table cache stores a cache table entry obtained through merging, because a virtual page number in the cache table entry is a merged virtual page number, and the processor does not know a quantity of mergeable entries corresponding to the cache table entry in this case, the processor needs to first generate, based on the merging threshold, a candidate virtual page number corresponding to any possible quantity of merged entries, to obtain a plurality of candidate virtual page numbers, and then, queries whether a candidate virtual page number can be found in the page table cache. A plurality of values of j indicate a plurality of possible quantities of merged entries.

It can be learned from the foregoing descriptions that each of the plurality of candidate virtual page numbers corresponds to a parameter value, and the parameter value corresponding to each candidate virtual page number indicates a quantity of merged entries corresponding to the corresponding candidate virtual page number; and after the querying whether the page table entry corresponding to the first candidate virtual page number exists in the page table cache, the method further includes: if the page table entry corresponding to the first candidate virtual page number exists in the page table cache, determining, as the target parameter value, a parameter value corresponding to the first candidate virtual page number; determining the base virtual page number based on the target parameter value and the target virtual page number, where the base virtual page number is the smallest virtual page number in the N virtual page numbers; and determining the target physical page number based on the base physical page number, the target virtual page number, and the base virtual page number.

If N=2^{x}, x is a positive integer, and the base virtual page number is exactly divisible by N, the determining the base virtual page number based on the target parameter value and the target virtual page number includes: determining that, in the base virtual page number, values of an x^{th}-to-last bit to a leftmost bit are equal to the values of the x^{th}-to-last bit to the leftmost bit in the target virtual page number, and values of a 0^{th}-to-last bit to an (x-1)^{th}-to-last bit are all the first value, where x is equal to the target parameter value.

After determining the base physical page number and the base virtual page number, the processor can determine the target physical page number based on the base physical page number, the target virtual page number, and the base virtual page number. Specifically, the determining the target physical page number based on the base physical page number, the target virtual page number, and the base virtual page number includes: determining a difference between the target virtual page number and the base virtual page number; and determining a sum of the difference and the base physical page number as the target physical page number.

The first value is 0, and the second value is 1.

Optionally, the method further includes: if a page table entry in the N page table entries changes, deleting the first cache table entry in the page table cache based on the changed page table entry, and determining whether M mergeable page table entries still exist in the N page table entries, where M is a positive integer greater than 2 and less than N; and if determining that the M mergeable page table entries still exist in the N page table entries, merging the M page table entries into a second cache table entry, and storing the second cache table entry in the page table cache. In other words, in this solution, a merged large page can be further split, and page table entries that can still be merged after splitting can be re-merged.

According to a second aspect, a memory page table caching apparatus is provided. The apparatus has a function of implementing behavior of the memory page table caching method in the first aspect. The apparatus includes one or more modules, and the one or more modules are configured to implement the memory page table caching method provided in the first aspect.

According to a third aspect, a compute device is provided. The compute device includes a processor and a storage. The storage is configured to: store a program for performing the memory page table caching method provided in the first aspect, and store data mentioned for implementing the memory page table caching method provided in the first aspect. The processor is configured to execute the program stored in the storage. The compute device may further include a communication bus. The communication bus is configured to establish a connection between the processor and the storage.

According to a fourth aspect, a computer-readable storage medium is provided. The computer-readable storage medium stores instructions. When the instructions are run on a computer, the computer is caused to perform the memory page table caching method according to the first aspect.

According to a fifth aspect, a computer program product including instructions is provided. When the computer program product runs on a computer, the computer is caused to perform the memory page table caching method according to the first aspect.

Technical effects achieved in the second aspect, the third aspect, the fourth aspect, and the fifth aspect are similar to the technical effects achieved by the corresponding technical means in the first aspect. Details are not described herein again.

### BRIEF DESCRIPTION OF DRAWINGS

FIG. 1 is a diagram of page table level division according to an embodiment of this application;
FIG. 2 is a diagram of a structure of a compute device according to an embodiment of this application;
FIG. 3 is a diagram of an architecture of a processor according to an embodiment of this application;
FIG. 4 is a flowchart of a memory page table caching method according to an embodiment of this application;
FIG. 5 is a diagram of creating a mergeable page table entry in Example 1 according to an embodiment of this application;
FIG. 6 is a diagram of merging page table entries during address translation in Example 1 according to an embodiment of this application;
FIG. 7 is a diagram of finding cache table entries obtained through merging during address translation in Example 1 according to an embodiment of this application;
FIG. 8 is a diagram of splitting a large page in Example 1 according to an embodiment of this application;
FIG. 9 is a diagram of creating a mergeable page table entry in Example 2 according to an embodiment of this application;
FIG. 10 is a diagram of merging page table entries during address translation in Example 2 according to an embodiment of this application;
FIG. 11 is a diagram of finding cache table entries obtained through merging during address translation in Example 2 according to an embodiment of this application;
FIG. 12 is a diagram of splitting a large page in Example 2 according to an embodiment of this application;
FIG. 13 is a diagram of creating a mergeable page table entry in Example 3 according to an embodiment of this application;
FIG. 14 is a diagram of merging page table entries during address translation in Example 3 according to an embodiment of this application;
FIG. 15 is a diagram of finding cache table entries obtained through merging during address translation in Example 3 according to an embodiment of this application;
FIG. 16 is a diagram of splitting a large page in Example 3 according to an embodiment of this application; and
FIG. 17 is a diagram of a structure of a memory page table caching apparatus according to an embodiment of this application.

### DESCRIPTION OF EMBODIMENTS

To make objectives, technical solutions, and advantages of embodiments of this application clearer, the following further describes implementations of this application in detail with reference to accompanying drawings.

For ease of understanding, before a memory page table caching method provided in embodiments of this application is explained and described in detail, terms, background knowledge, and implementation environments mentioned in embodiments of this application are first described.

The terms mentioned in embodiments of this application are first described.

### 1. Virtual page (virtual page, VP) and physical page (physical page, PP)

In memory paging management, both a virtual address space (or referred to as a virtual memory) and a physical address space (or referred to as a physical memory) are divided into a plurality of storage units with equal capacities. The storage units obtained by dividing the virtual address space are referred to as virtual pages, and the storage units obtained by dividing the physical address space are referred to as physical pages. The physical page may also be referred to as a page (page) or a page frame (page frame). A size (which may also be referred to as a capacity) of the virtual page is equal to that of the physical page, and is usually fixed. For example, the size of the virtual page or the physical page may be four kilobytes, two megabytes, one gigabyte, or the like.

### 2. Physical address (physical address, VA)

The physical address is a unique storage address corresponding to a byte unit in a storage. In a paging mechanism, an operating system (operating system, OS) of a compute device may divide a physical address space into contiguous physical pages. One virtual address space is divided into a plurality of contiguous virtual pages, and one physical address may be uniquely for determining one physical page.

The physical address includes a physical page number (physical page number, PPN) and a physical page offset (physical page offset, PPO). The physical page number indicates a physical page on which the physical address is located, and the physical page offset is an offset of the physical address relative to a start address of the physical page on which the physical address is located.

The physical page number is a high-order part of the physical address, and the physical page offset is a low-order part of the physical address. In other words, the physical page number is a left part or a header of the physical address, and the physical page offset is a right part or an end of the physical address.

A 32-bit operating system is used as an example. The physical address is in a 32-bit (bit) binary form, the physical page number is 20 high-order bits (namely, a 12^{th} bit to a 31^{st} bit) in the physical address, and the physical page offset is 12 low-order bits (namely, a 0^{th} bit to an 11^{th} bit) in the physical address.

### 3. Virtual address (virtual address, VA)

The virtual address is a logical address used by a process of an application to access a storage. To cause a plurality of processes to run in parallel, an operating system allocates a private virtual address space to each process in an initialization phase, and maps the virtual address space of each process to a corresponding physical address space. When a plurality of programs simultaneously run, processes of the plurality of programs correspond to different virtual address spaces, and the processes of the plurality of programs are actually in different physical address spaces, thereby ensuring normal execution of the plurality of programs. An operating system of a compute device may divide one virtual address space into a plurality of contiguous virtual pages by using a paging mechanism, and one virtual address may be uniquely for determining one virtual page.

The virtual address includes a virtual page number (virtual page number, VPN) and a virtual page offset (virtual page offset, VPO). The virtual page number indicates a virtual page on which the virtual address is located, and the virtual page offset is an offset of the virtual address relative to a start address of the virtual page on which the virtual address is located.

The virtual page number is a high-order part of the virtual address, and the virtual page offset is a low-order part of the virtual address. In other words, the virtual page number is a left part or a header of the virtual address, and the virtual page offset is a right part or an end of the virtual address.

A 32-bit operating system is used as an example. The virtual address is in a 32-bit (bit) binary form, the virtual page number is 20 high-order bits (namely, a 12^{th} bit to a 31^{st} bit) in the virtual address, and the virtual page offset is 12 low-order bits (namely, a 0^{th} bit to an 11^{th} bit) in the virtual address.

It should be noted that one virtual page number corresponds to one physical page number. For a pair of a physical address and a virtual address that have a mapping relationship, there is a specific mapping relationship or translation relationship between a physical page number included in the physical address and a virtual page number included in the virtual address, and a physical page offset included in the physical address is the same as a virtual page offset included in the virtual address.

### 4. Page table

The page table is a type of data structure in a memory. The page table includes a plurality of page table entries, and each page table entry indicates a mapping relationship between one virtual address and one physical address. For example, each page table entry includes a mapping relationship between one virtual page number and one physical page number. A compute device can determine, based on the mapping relationship between the virtual page number and the physical page number, a physical page corresponding to a virtual page on which the virtual address is located, and then determine, based on a virtual page offset, a physical address corresponding to the virtual address. The page table may be divided into a plurality of levels. For example, the page table includes a level 1 page table, a level 2 page table, a level 3 page table, and the like.

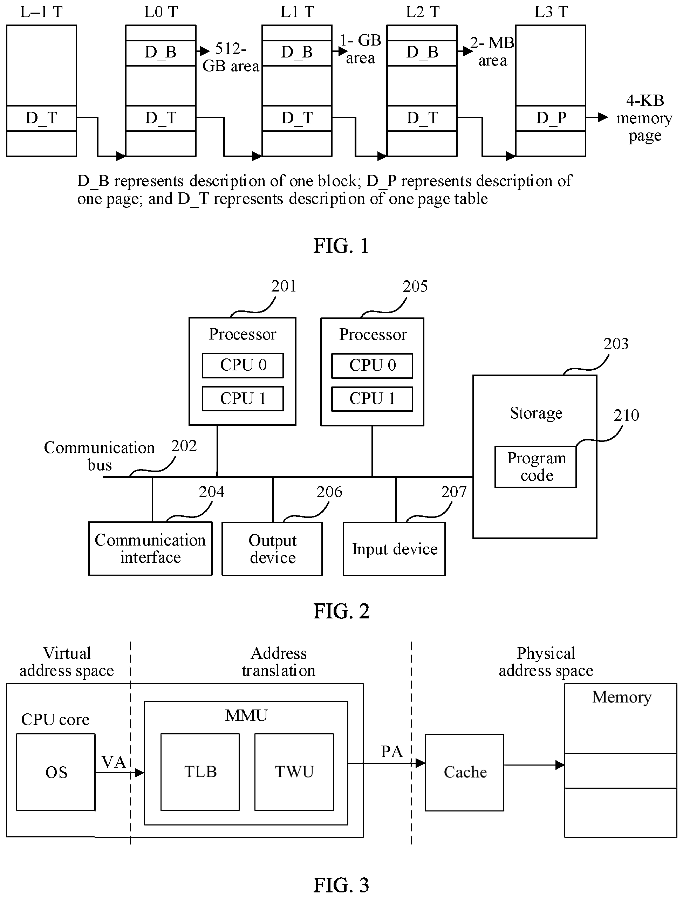

Refer to FIG. 1 for understanding of the page table and a size of a memory page. FIG. 1 is a diagram of page tables in which a size of a smallest page is 4 KB according to an embodiment of this application. The page tables include five levels in total, which are sequentially a level -1 page table (level -1 table, L-1 T), a level 0 page table (level 0 table, L0 T), a level 1 page table (level 1 table, L1 T), a level 2 page table (level 2 table, L2 T), and a level 3 page table (level 3 table, L3 T) in descending order of page sizes. The level -1 page table is a highest-level page table, and includes description information of all the page tables. The level 3 page table is a lowest-level page table, with a page size of 4 KB, and the level 3 page table includes description information of a physical page. In addition, a page size of the level 2 page table is 2 MB, one level 2 page table includes 512 level 3 page tables, and the level 2 page table includes description information and block description information of the level 3 page tables. A page size of the level 1 page table is 1 GB, one level 1 page table includes 512 level 2 page tables, and the level 1 page table includes description information and block description information of the level 2 page tables. A page size of the level 0 page table is 512 GB. One level 0 page table includes 512 level 1 page tables, and the level 0 page table includes description information and block description information of the level 1 page tables. It can be learned that, in each level of page table, the page size has already been set. In embodiments of this application, a page size of an any-level page table may be considered as a base page.

During specific implementation, in addition to the smallest page of 4 KB shown in FIG. 1, there may alternatively be a smallest page of 16 KB or with another size. It is clear that a quantity of levels of the page table is not limited to the five levels shown in FIG. 1, and the page table may alternatively be divided into three levels, four levels, or the like. In other words, in embodiments of this application, a smallest unit of a page is not limited, to be specific, a size of the physical page is not limited, and the quantity of levels of the page table is not limited.

### 5. Page table cache

The page table cache is a type of cache on a processor, and is also referred to as a TLB. The TLB caches some PTEs in a page table. In other words, the page table cache includes a plurality of cache table entries, where each cache table entry is used to store a mapping relationship indicated by a page table entry and found from the page table. A compute device stores, as a cache table entry in the page table cache, the mapping relationship found from the page table. Then, before querying the mapping relationship from the page table next time, the compute device may first query the cache table entry in the page table cache. If finding any cache table entry in the page table cache, the compute device obtains a mapping relationship stored in the cache table entry without accessing the page table in a memory, so that querying time can be reduced.

### 6. Page table walk (page table walk)

If a compute device does not find a cache table entry in a page table cache, the compute device accesses a page table in a memory, to query a mapping relationship in the page table, and stores the found mapping relationship as a cache table entry in the page table cache. This process is referred to as a page table walk.

### 7. Superpage (superpage)

The superpage is a memory page larger than a base page. The superpage may have a plurality of sizes, and is not limited to a page size of an any-level page table. For example, one superpage is up to several megabytes in sizes. With the superpage, each cache table entry in a TLB can be used for mapping a large physical memory area to a virtual address space. This significantly increases TLB coverage, reduces TLB misses, and provides performance improvements for numerous applications. Embodiments of this application are implemented based on the superpage.

### 8. Process

The process is a running activity of an application in a compute device on a dataset, and is an execution instance (or referred to as an execution entity) of the application. The process is also a basic unit for an operating system of the compute device to allocate and schedule resources. Each process includes various system resources such as a private virtual address space, a dataset, a disk, and bandwidth. The process may be a running browser, a chat window, or the like. The process may have a plurality of threads, and the thread may be, for example, that a chat tool receives a message or sends a message.

The following describes the background knowledge mentioned in embodiments of this application.

A modern system on a chip (system on a chip, SoC) usually uses a memory management unit (memory management unit, MMU) to enhance memory utilization and provides an easy-to-program interface for a programmer. A main function of the MMU is to provide isolation between a virtual address space and a physical address space. However, because a PTW needs to be performed for invoking of the MMU by the SoC, performance overheads are caused. To translate a virtual address, the MMU accesses a memory to obtain a PTE. This process is referred to as a PTW. The MMU caches the obtained PTE in a TLB, to reduce PTW enabling. However, in a case of a high TLB miss rate, frequent PTWs may significantly degrade performance because frequent pauses are needed during application execution. Therefore, it is necessary to increase a TLB hit rate and reduce a quantity of PTWs.

In a conventional design, a page table and the TLB operate at a page level. In other words, the PTE and entries in the TLB include information about single pages. In addition, the PTW is for looking up a result of a single page. In addition, a modern OS usually allocates a physical memory at a granularity of blocks (a group of contiguous free physical pages). To utilize such contiguousness and reduce PTWs, a page size of a finite set is usually defined for a processor architecture. However, the conventional design is limited in making full use of the contiguousness provided by the OS. For example, it is assumed that the OS allocates a physical block of 512 KB. If a page size of 512 KB is not defined in a machine system structure, the system processes the block as 128 separate pages of 4 KB. Such unawareness between hardware and the OS results in many separate PTWs to obtain a plurality of pages of 4 KB, instead of block-level address translation.

In other words, a page size supported by the system in related technologies is limited, and pages of various sizes cannot be flexibly allocated based on application scenarios. In addition, a quantity of entries in the TLB is limited. If each VPN-to-PPN mapping needs to correspond to one PTE, a TLB miss is easily caused, and the TLB miss causes a PTW, increasing memory access latency and overheads.

The following describes the implementation environments of this application.

It should be understood that the implementation environments described in embodiments of this application are intended to describe the technical solutions in embodiments of this application more clearly, and do not constitute any limitation on the technical solutions provided in embodiments of this application. A person of ordinary skill in the art may learn that with evolution of a system architecture and emergence of a new service scenario, the technical solutions provided in embodiments of this application are also applicable to similar technical problems.

FIG. 2 is a diagram of a structure of a compute device according to an embodiment of this application. The compute device includes one or more processors 201, a communication bus 202, a storage 203, and one or more communication interfaces 204.

The processor 201 is a general-purpose central processing unit (central processing unit, CPU), a network processor (network processor, NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. Optionally, the PLD is a complex programmable logic device (complex programmable logic device, CPLD), a field-programmable logic gate array (field-programmable gate array, FPGA), generic array logic (generic array logic, GAL), or any combination thereof.

The communication bus 202 is configured to transfer information between the foregoing components. Optionally, the communication bus 202 may be classified as an address bus, a data bus, a control bus, and the like. For ease of representation, only one bold line represents the bus in FIG. 2, but this does not indicate that there is only one bus or only one type of bus.

Optionally, the storage 203 is a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of an instruction or a data structure and that is accessible to a computer. However, this is not limited hereto. The storage 203 exists independently, and is connected to the processor 201 through the communication bus 202, or the storage 203 is integrated with the processor 201.

The communication interface 204 is configured to communicate with another device or a communication network by using any apparatus like a transceiver. The communication interface 204 includes a wired communication interface, and optionally, further includes a wireless communication interface. The wired communication interface is, for example, an Ethernet interface. Optionally, the Ethernet interface is an optical interface, an electrical interface, or a combination thereof. The wireless communication interface is a wireless local area network (wireless local area network, WLAN) interface, a cellular network communication interface, a combination thereof, or the like.

Optionally, in some embodiments, the compute device includes a plurality of processors, for example, the processor 201 and the processor 205 shown in FIG. 2. Each of these processors is a single-core processor or a multi-core processor. Optionally, the processor herein is one or more devices, circuits, and/or processing cores for processing data (for example, computer program instructions).

During specific implementation, in an embodiment, the compute device further includes an output device 206 and an input device 207. The output device 206 communicates with the processor 201, and can display information in a plurality of manners. For example, the output device 206 is a liquid crystal display (liquid crystal display, LCD), a light emitting diode (light emitting diode, LED) display device, a cathode ray tube (cathode ray tube, CRT) display device, a projector (projector), or the like. The input device 207 communicates with the processor 201, and can receive an input from a user in a plurality of manners. For example, the input device 207 is a mouse, a keyboard, a touchscreen device, a sensor device, or the like.

In some embodiments, the storage 203 is configured to store program code 210 for executing the solutions of this application, and the processor 201 can execute the program code 210 stored in the storage 203. The program code includes one or more software modules. The compute device can implement, by using the processor 201 and the program code 210 in the storage 203, a memory page table caching method provided in embodiments of this application.

The method provided in embodiments of this application may be applied to a memory access scenario, and the memory access scenario may also be referred to as a data read/write scenario. In the memory access scenario, before executing a memory access instruction, the compute device first extracts a to-be-translated target virtual address from the memory access instruction, and then determines a target physical address corresponding to the target virtual address, so that memory access is performed based on the target physical address. In other words, the memory access instruction carries the target virtual address, the target physical address corresponding to the target virtual address is determined, so that memory access is performed based on the target physical address.

FIG. 3 is a diagram of an architecture of a processor according to an embodiment of this application. The processor is configured to perform a memory page table caching method provided in embodiments of this application. Refer to FIG. 3. The processor includes a CPU core (core), an MMU, a cache (cache), and a memory (memory). The CPU core includes a software (software) part, for example, an operating system (OS). The MMU is a hardware circuit in the processor. The MMU may include a page table cache (TLB). It is clear that the page table cache may also be located in a location other than the MMU in the processor. The following uses an example in which the TLB is located in the MMU for description. In this embodiment of this application, the MMU includes the TLB and a table walk unit (table walk unit, TWU).

The operating system belongs to a virtual address space category, and is configured to generate a to-be-translated virtual address (VA), and send the to-be-translated VA to the MMU. The MMU is configured to perform address translation, that is, implement translation from the virtual address to a physical address (PA). The cache and the memory belong to a physical address space category, and are configured to access a corresponding storage space based on the PA.

Specifically, a core of the processor sends a memory access instruction to the MMU. The MMU extracts a to-be-translated target VA from the memory access instruction, and matches the target VA with a table entry in the TLB, to determine whether the target VA is found in the TLB. When the target VA is found (hit) in the TLB, a target PA corresponding to the target VA is determined based on the TLB, and data corresponding to the target PA is obtained from the cache. If the data corresponding to the target PA does not exist in the cache, the data corresponding to the target PA is obtained from the memory. When the target VA is not found (miss) in the TLB, the MMU queries a PT based on the target VA, to determine a target PTE. The target PTE indicates a mapping relationship between the target VA and the target PA. In this way, the MMU may refresh the TLB based on the target PTE, determine the target PA corresponding to the target VA, and obtain data corresponding to the target PA from the cache. If the data corresponding to the target PA does not exist in the cache, the data corresponding to the target PA is obtained from the memory.

Because a storage space of the TLB is limited, and a quantity of PTEs in the PT is far larger than a quantity of table entries in the TLB, a size of a physical memory that can be covered by the table entries in the TLB is limited. Consequently, a TLB miss may be caused during address translation, and memory access overheads are increased through a page table walk during the TLB miss.

In view of this, embodiments of this application provide a memory page table caching method, so that more page sizes that can be flexibly created by an OS can be increased, and a process can also apply for a memory page with a specific size as required, to reduce a quantity of entries required by a PTE for caching in a TLB, reduce TLB misses, and reduce PTW overheads.

The following describes the memory page table caching method provided in embodiments of this application. It should be noted that the method is performed by a compute device, and the compute device may be a terminal device like a computer or a mobile phone, or may be a server. During specific implementation, the method may be performed by a processor of the compute device.

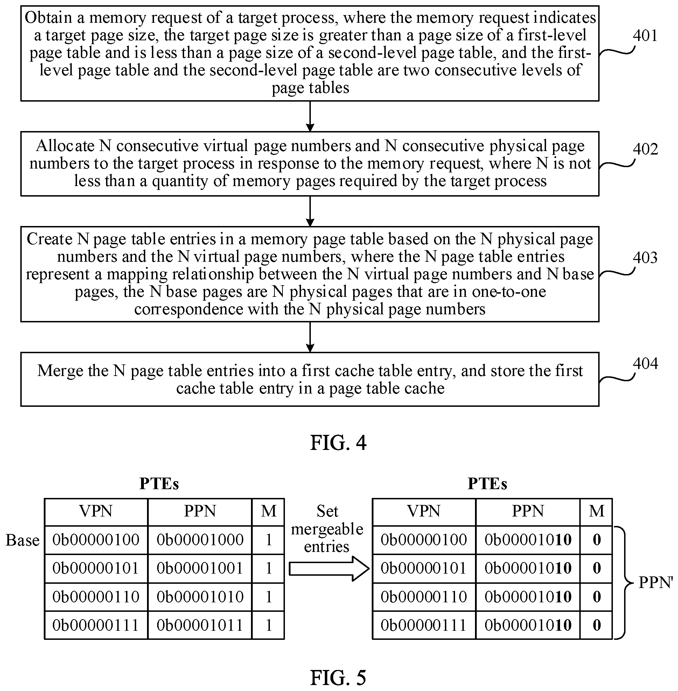

FIG. 4 is a flowchart of a memory page table caching method according to an embodiment of this application. The method is applied to a compute device, and is specifically applied to a processor of the compute device. As shown in FIG. 4, the method includes the following steps.

**Step 401:** Obtain a memory request of a target process, where the memory request indicates a target page size, the target page size is greater than a page size of a first-level page table and is less than a page size of a second-level page table, and the first-level page table and the second-level page table are two consecutive levels of page tables.

In this solution, a large page can be created by merging page table entries. Therefore, to create the large page from a source, a page with a specific size can be flexibly applied for as required when the process applies for a memory, and is not limited to a page with a page size of a specific-level page table.

The target process is used as an example. When the target process accesses the memory, the memory request is generated. The memory request indicates the target page size. The target page size may not be equal to a page size of an any-level page table. Alternatively, it is clear that the target page size may be equal to a page size of a specific-level page table. The page table division shown in FIG. 1 is used as an example. The target page size may be greater than 4 KB and less than 2 MB. For example, the target page size is 32 KB. Alternatively, the target page size may be greater than 2 MB and less than 1 GB. For example, the target page size is 6 MB.

Step 401 may be specifically performed by an operating system (OS) in the processor, to be specific, the operating system obtains the memory request of the target process.

**Step 402:** Allocate N consecutive virtual page numbers and N consecutive physical page numbers to the target process in response to the memory request, where N is not less than a quantity of memory pages required by the target process.

It should be understood that page table entries that can be merged need to meet a merging condition, and not just any page table entry can be merged. In this embodiment of this application, the merging condition includes: Virtual page numbers are consecutive and physical page numbers are consecutive. In view of this, the processor allocates the N consecutive virtual page numbers and the N consecutive physical page numbers to the target process in response to the memory request of the target process. N is not less than the quantity of memory pages required by the target process. The quantity of memory pages required by the target process is determined based on the target page size.

In an implementation, the processor first determines a value of N based on the target page size and a size of a base page, then determines the N consecutive physical page numbers from unused physical page numbers based on the value of N, determines the N consecutive virtual page numbers based on an unused virtual address space, and allocates the determined N physical page numbers and N virtual page numbers to the target process. The size of the base page is equal to the page size of the first-level page table.

The processor may divide the target page size by the size of the base page to obtain a quotient and a remainder, and determine the value of N based on the quotient or the quotient and the remainder. If the remainder is 0, the quotient indicates the quantity of memory pages required by the target process. If the remainder is not 0, the quotient plus 1 indicates the quantity of memory pages required by the target process.

In an implementation, the value of N may be a positive integer, and there is no additional limitation. In this case, if the remainder is 0, the processor determines that the value of N is equal to the quotient. If the remainder is not 0, the processor determines, as the value of N, a value obtained by adding 1 to the quotient.

An example in which the base page is a page of 4 KB is used. Assuming that the target page size is 36 KB, a quotient of dividing 36 by 4 is 9, and a remainder is 0, the processor determines that N=9. Assuming that the target page size is 37 KB, a quotient of dividing 37 by 4 is 9, and a remainder is 1, the processor determines that N=10.

In another implementation, there is an additional limitation on the value of N. The limitation is that N=2^{x} and x is a positive integer. In this case, the processor determines, as the value of N, a minimum value that is not less than the quotient and whose value is equal to 2^{x}.

The example in which the base page is the page of 4 KB is still used. Assuming that the target page size is 32 KB, a quotient of dividing 32 by 4 is 8, and 8=2³, the processor determines that N=8. Assuming that the target page size is 48 KB, a quotient of dividing 48 by 4 is 12, and that 16=2⁴ is minimum 2^{x} that is not less than 12, the processor determines that N=16.

In still another implementation, there is an additional limitation on the value of N. The limitation is that N=2C and C is a positive integer. In this case, the processor determines, as the value of N, a minimum value that is not less than the quotient and whose value is equal to 2C.

The example in which the base page is the page of 4 KB is still used. Assuming that the target page size is 44 KB, a quotient of dividing 44 by 4 is 11, and that 12=2×6 is minimum 2C that is not less than 11, the processor determines that N=12.

In addition to the foregoing several implementations, there may be another limitation on the value of N. This is not limited in this embodiment of this application.

The foregoing additional limitation on N may serve as a sub-condition in the merging condition of the page table entries. To be specific, in addition to the foregoing first sub-condition (to be specific, the virtual page numbers are consecutive and the physical page numbers are consecutive), the merging condition further includes a second sub-condition. The second sub-condition is the additional limitation on N. For example, the second sub-condition is that N=2^{x} and x is a positive integer; or the second sub-condition is that N=2C and C is a positive integer.

During specific implementation, considering that if read/write attributes of pages are different, read/write performance of the process on the memory is affected even after merging. Therefore, the merging condition further includes that the read/write attributes of pages are the same (that is, a third sub-condition), to be specific, each page has a read/write attribute, and pages with a same read/write attribute can be merged. For example, if read/write attributes of N base pages corresponding to the N consecutive physical page numbers are the same, the N base pages can be merged into a large page. That the read/write attributes are the same is, for example, the N base pages are all read-only pages or readable/writable pages.

It is clear that the merging condition may further include another sub-condition. For example, the merging condition further includes a fourth sub-condition. The fourth sub-condition is that both a base physical page number and a base virtual page number are exactly divisible by N. The base physical page number is a smallest physical page number in the N to-be-merged physical page numbers, and the base virtual page number is a smallest virtual page number in the N to-be-merged virtual page numbers. The fourth sub-condition may be a sub-condition that further needs to be met when N=2^{x}. A principle of such design may be understood according to the following embodiments. It is clear that the fourth sub-condition may not need to be related to the value of N.

It should be noted that the second sub-condition and the fourth sub-condition are optional conditions, and the first sub-condition and the third sub-condition are basic conditions that need to be met to ensure reliability and performance of the solutions.

It can be learned from the foregoing descriptions that the processor may determine the value of N based on the second sub-condition in the merging condition, the target page size, and the size of the base page. For example, N=2^{x}. Then, the processor determines the N consecutive physical page numbers from the unused physical page numbers based on another sub-condition in the merging condition, and determines the N consecutive virtual page numbers based on the unused virtual address space.

For example, the processor determines at least one group of physical page numbers from the unused physical page numbers based on the first sub-condition in the merging condition, where each group of physical page numbers includes a plurality of physical page numbers whose page numbers are consecutive and whose quantity is not less than N; and determines at least one group of candidate physical page numbers from the at least one group of physical page numbers based on the third sub-condition, where a plurality of physical page numbers included in each group of candidate physical page numbers correspond to a same read/write attribute. Finally, the processor determines final N physical page numbers from the at least one group of candidate physical page numbers based on the fourth sub-condition, where a smallest physical page number in the finally determined N physical page numbers is exactly divisible by N. Similarly, the processor determines at least one group of virtual page numbers from the unused virtual address space based on the first sub-condition in the merging condition, where each group of virtual page numbers includes a plurality of virtual page numbers whose page numbers are consecutive and whose quantity is not less than N; and determines, based on the fourth sub-condition, final N virtual page numbers from the at least one group of virtual page numbers, where a smallest virtual page number in the finally determined N virtual page numbers is exactly divisible by N.

It should be understood that a sequence in which a plurality of sub-conditions in the merging condition need to be met is not limited in this embodiment of this application. For example, the processor may perform filtering and determine the final N physical page numbers and N virtual page numbers through filtering in a sequence of the second sub-condition, the first sub-condition, the third sub-condition, and the fourth sub-condition described above or in a sequence of the first sub-condition, the third sub-condition, the second sub-condition, and the fourth sub-condition, or obtain physical page numbers that meet two sub-conditions or even three sub-conditions through simultaneous filtering in a round of filtering, provided that a physical page number and a virtual page number that meet all the sub-conditions in the merging condition can be finally obtained through filtering.

**Step 403:** Create N page table entries in a memory page table based on the N physical page numbers and the N virtual page numbers, where the N page table entries represent a mapping relationship between the N virtual page numbers and the N base pages, the N base pages are N physical pages that are in one-to-one correspondence with the N physical page numbers.

After determining the N physical page numbers and the N virtual page numbers that are allocated to the target process, the processor creates the N page table entries in the memory page table. The N page table entries represent the mapping relationship between the N virtual page numbers and the N base pages, and the N base pages are the N physical pages that are in one-to-one correspondence with the N physical page numbers.

Each of the N page table entries includes one virtual page number in the N virtual page numbers, and one reference physical page number. In other words, the N virtual page numbers and N same reference physical page numbers are recorded in the N page table entries.

Optionally, for ease of subsequently identifying that the N page table entries are mergeable entries, the processor further sets a tag bit in each page table entry, and indicates, by using the tag bit, whether a corresponding page table entry is a mergeable entry. It is clear that the processor may not set the tag bit, but determines, by checking whether a physical page number in a page table entry is the same as a physical page number in any neighboring page table entry, whether the page table entry is a mergeable entry. If a physical page number in a page table entry is the same as a physical page number in any neighboring page table entry, it indicates that these same physical page numbers are same reference physical page numbers, and a plurality of neighboring page table entries having same reference physical page numbers are all mergeable entries. If a physical page number in a page table entry is not the same as a physical page number in any neighboring page table entry, it indicates that the physical page number in the page table entry is a real physical page number instead of a reference physical page number, and the page table entry is not a mergeable entry.

The following describes an implementation process in which the processor generates the reference physical page number.

In an implementation, the processor determines the smallest physical page number in the N physical page numbers as the base physical page number, and generates the reference physical page number based on the base physical page number. Then, the processor creates the N page table entries in the memory page table. Each of the N page table entries includes one of the N virtual page numbers, the reference physical page number, and a tag bit, and tag bits in the N page table entries indicate that the N page table entries are all mergeable entries.

When N=2^{x}, x is a positive integer, and the base physical page number is exactly divisible by N, the implementation process in which the processor generates the reference physical page number based on the base physical page number is: determining that, in the reference physical page number, values of an x^{th}-to-last bit to a leftmost bit are equal to values of an x^{th}-to-last bit to a leftmost bit in the base physical page number, values of a 0^{th}-to-last bit to an (x-2)^{th}-to-last bit are all a first value, and a value of an (x-1)^{th}-to-last bit is a second value.

An example in which the first value is 0 and the second value is 1 is used. If the base physical page number is denoted as Base PPN, and the reference physical page number is denoted as PPN', the processor may first set PPN' to be equal to Base PPN, and then set PPN'[x-2:0] to be equal to 0 and PPN'[x-1] to be equal to 1. It should be understood that, in this embodiment of this application, both the base physical page number and the reference physical page number are represented by using binary numbers.

For example, FIG. 5 is a diagram of creating mergeable page table entries in Example 1 according to an embodiment of this application. Refer to FIG. 5. In Example 1, the mergeable page table entries includes four page table entries, that is, N=4=2², and x=2. Four virtual page numbers included in the four page table entries are respectively 0b00000100, 0b00000101, 0b00000110, and 0b00000111, and corresponding four physical page numbers are respectively 0b00001000, 0b00001001, 0b00001010, and 0b00001011. Before the N page table entries are set as mergeable entries, values of tag bits M in the N page table entries are 1, indicating that the N page table entries have not been set as mergeable entries. After the N page table entries are set as mergeable entries, the values of the tag bits M in the N page table entries are 0, indicating that the N page table entries have been set as mergeable entries, and the physical page numbers in the N page table entries are all modified to a same reference physical page number in the foregoing manner, where the reference physical page number is 0b00001010.

In addition to the foregoing implementation of determining the reference physical page number, the processor may generate the reference physical page number in another manner, provided that the base physical page number can be derived based on the reference physical page number, and further, a real physical page number can be derived based on the base physical page number during address translation, that is, any implementation can be used, provided that the processor can implement forward and reverse translation between page numbers according to a corresponding rule.

In addition, in the implementation described above, when N=2^{x}, and both the base physical page number and the base virtual page number are exactly divisible by N, if a value of the tag bit and the values of the 0^{th}-to-last bit to the (x-2)^{th}-to-last bit in the reference physical page number are all the first value, the processor does not need to waste an additional storage space to record a quantity N of to-be-merged entries and/or the parameter value x. Subsequently, the value of x may be determined by counting a quantity of bits that are of the first value and that are in a low-order bit of a first binary character string, and the value of N can be known by knowing the value of x. The first binary character string is a binary character string obtained by concatenating an end of the reference physical page number with the tag bit. A specific implementation is described below.

It is clear that the processor may also record the quantity N of to-be-merged entries and/or the parameter value x by using the additional storage space. In this way, the parameter value x and/or the quantity N of to-be-merged entries can be obtained more directly subsequently, and manners of determining the value of the tag bit and the reference physical page number can be more flexible and diversified.

Step 402 and step 403 are also specifically performed by the OS in the processor, to be specific, the OS queries for the N physical page numbers and the N virtual page numbers that meet the merging condition, and creates the N page table entries in the memory page table.

**Step 404:** Merge the N page table entries into a first cache table entry, and store the first cache table entry in a page table cache.

After creating the N page table entries, during subsequent address translation, the processor may perform step 404, to increase a subsequent TLB hit rate. Step 404 is specifically performed by an MMU in the processor.

The following describes a specific implementation process of merging the N page table entries into the first cache table entry.

It can be learned from the foregoing descriptions that a virtual address is generated when the process accesses the memory, and the processor needs to translate the virtual address into a real physical address by using the MMU, for accessing a physical memory space based on the real physical address. The virtual address includes a virtual page number, and the physical address includes a physical page number. An address translation process is mainly a process of determining the physical page number based on the virtual page number. The following describes, by using an example in which the target process accesses the memory, an implementation process of merging the N page table entries when the target process accesses the memory space.

The processor obtains a memory access request of the target process. The memory access request includes a target virtual page number, and the target virtual page number is one of the N virtual page numbers. The processor merges the N page table entries into the first cache table entry during determining of a target physical page number corresponding to the target virtual page number. The target physical page number is the real physical page number.

In an implementation, each of the N page table entries includes one of the N virtual page numbers, the N page table entries each further include the same reference physical page number, the reference physical page number is generated based on the base physical page number, and the base physical page number is the smallest physical page number in the N physical page numbers. During determining of the target physical page number corresponding to the target virtual page number, the processor looks up, from the memory page table, a page table entry in which the target virtual page number is included, to obtain a first page table entry. If the first page table entry is a mergeable entry, the processor determines a target parameter value based on the first page table entry, where the target parameter value indicates the value of N. Then, the processor generates a merged virtual page number based on the target parameter value and the target virtual page number, determines the base physical page number based on the reference physical page number in the first page table entry, and generates the first cache table entry. The first cache table entry includes the merged virtual page number, the base physical page number, and a tag bit, and the tag bit in the first cache table entry indicates that the first cache table entry is a merged entry.

When each of the N page table entries further includes one tag bit, the processor determines, based on a value of the tag bit in the first page table entry, that the first page table entry is a mergeable entry. The tag bit in the first page table entry is the first value, indicating that the first page table entry is a mergeable entry. It is clear that, regardless of whether each page table entry includes a tag bit, the processor may determine, by checking whether a physical page number in the first page table entry is the same as a physical page number in any neighboring page table entry, whether the first page table entry is a mergeable entry.

If the N page table entries each further include a tag bit whose value is the first value, in the reference physical page number, the values of the 0^{th}-to-last bit to the (x-2)^{th}-to-last bit are all the first value, a value of an (x-1)^{th}-to-last bit is the second value, N=2^{x}, x is a positive integer, and x represents the target parameter value, an implementation in which the processor determines the target parameter value based on the first page table entry is: counting, starting from a rightmost bit of the first binary character string to left, a quantity of bits whose values are the first value, until a 1^{st} bit of a non-first value from right to left in the first binary character string is counted, to obtain the target parameter value, where the first binary character string is the binary character string obtained by concatenating the end of the reference physical page number with the tag bit.

An example in which the first value is 0 and the second value (that is, a non-first value) is 1 is used. Assuming that the target virtual page number is 0b00000110 in FIG. 5, the first page table entry is a 3^{rd} mergeable table entry in FIG. 5, the reference physical page number in the first page table entry is 0b00001010, the tag bit M is equal to 0, the first binary character string is 0b000010100, a quantity of bits whose values are 0 is counted starting from the rightmost bit of the first binary character string to left, until a 1^{st} bit whose value is 1 from right is counted, and two bits whose values are 0 are counted in total. In this case, an obtained target parameter value is 2, that is, that x=2 is determined through the counting.

It is clear that the processor may alternatively count, starting from a rightmost bit of the reference physical page number to left, a quantity of bits whose values are the first value, until a 1^{st} bit of a non-first value from right to left in the reference physical page number is counted, and 1 is added to a total quantity of bits of 0 obtained through the counting, to obtain the target parameter value.

After determining the target parameter value, the processor may generate the merged virtual page number based on the target parameter value and the target virtual page number.

In an implementation, the processor determines that, in the merged virtual page number, values of an x^{th}-to-last bit to a leftmost bit are equal to values of an x^{th}-to-last bit to a leftmost bit in the target virtual page number, values of a 0^{th}-to-last bit to an (x-2)^{th}-to-last bit are all the first value, and a value of an (x-1)^{th}-to-last bit is the second value.

The example in which the first value is 0 and the second value is 1 is still used. If the target parameter value is denoted as x, the target virtual page number is denoted as Requested VPN, and the merged virtual page number is denoted as VPN', the processor may first set VPN' to be equal to Requested VPN, and then set VPN'[x-2:0] to be equal to 0 and VPN'[x-1] to be equal to 1.

For example, assuming that the target virtual page number is 0b00000110 in FIG. 5, the merged virtual page number is determined as 0b00000110 in the foregoing manner.

After determining the target parameter value, the processor can further determine the base physical page number based on the target parameter value and the reference physical page number. In an implementation, the processor determines that, in the base physical page number, the values of the x^{th}-to-last bit to the leftmost bit are equal to the values of the x^{th}-to-last bit to the leftmost bit in the reference physical page number, and values of a 0^{th}-to-last bit to an (x-1)^{th}-to-last bit are all the first value x is equal to the target parameter value.

It should be understood that an implementation process in which the processor determines the reference physical page number based on the base physical page number during creation of the N mergeable page table entries and an implementation process in which the base physical page number is determined based on the reference physical page number during merging of the N page table entries match, are symmetrical, or are inverse processes to each other.

It can be learned from the foregoing descriptions that a process of merging the page table entries is performed during address translation. In this case, after determining the base physical page number based on the reference physical page number in the first page table entry, the processor further determines the base virtual page number based on the target parameter value and the target virtual page number, where the base virtual page number is the smallest virtual page number in the N virtual page numbers. Then, the processor determines the target physical page number based on the base physical page number, the target virtual page number, and the base virtual page number, where the target physical page number is a translated real physical page number.

When N=2^{x}, x is a positive integer, and the base virtual page number is exactly divisible by N, an implementation process in which the processor determines the base virtual page number based on the target parameter value and the target virtual page number is: determining that, in the base virtual page number, values of an x^{th}-to-last bit to a leftmost bit are equal to the values of the x^{th}-to-last bit to the leftmost bit in the target virtual page number, and values of a 0^{th}-to-last bit to an (x-1)^{th}-to-last bit are all the first value, where x is equal to the target parameter value.

The example in which the first value is 0 and the second value is 1 is still used. If the target parameter value is denoted as x, the target virtual page number is denoted as Requested VPN, and the base virtual page number is denoted as Base VPN, the processor may first set Base VPN to be equal to Requested VPN, and then set Base VPN[x-1:0] to be equal to 0.

After determining the base physical page number and the base virtual page number, the processor can determine the target physical page number based on the base physical page number, the target virtual page number, and the base virtual page number. A specific implementation is as follows: The processor determines a difference between the target virtual page number and the base virtual page number, and determines a sum of the difference and the base physical page number as the target physical page number.

For example, if the target physical page number is denoted as Real PPN, Real PPN=Base PPN+(Requested VPN-Base VPN).

The foregoing describes implementation processes in which the processor merges the N page table entries into the first cache table entry and determines the target physical page number during address translation. After obtaining the first cache table entry, the processor may store the first cache table entry in the page table cache (TLB), to increase the TLB hit rate during the subsequent address translation.

It can be learned from the foregoing related descriptions of the address translation that, during address translation, before looking up, from the memory page table, the page table entry in which the target virtual page number is included, the processor first queries the page table cache based on the target virtual page number, to determine whether the target virtual page number is found in the page table cache. If the target virtual page number is not found in the page table cache, the processor performs a step of looking up, from the memory page table, the page table entry in which the target virtual page number is included.

In view of this, step 404 may be performed during translation of the target virtual address for the first time, that is, the first cache table entry has never been stored in the TLB. Alternatively, the first cache table entry was stored in the TLB, but the first cache table entry is deleted from the TLB due to excessively low hotness of a page corresponding to the first cache table entry or for another reason, that is, when the target virtual address is translated this time, the TLB does not include the first cache table entry. In this case, the processor may be triggered to perform step 404.

The following describes a complete process of the address translation.

After obtaining the memory access request of the target process, the processor first queries, from the page table cache, the page table entry in which the target virtual page number is included. If the page table entry in which the target virtual page number is included is not found in the page table cache, the processor determines a plurality of candidate virtual page numbers based on a merging threshold and the target virtual page number, where the merging threshold indicates a maximum quantity of page table entries that can be merged in one merge. The processor queries whether a page table entry corresponding to a first candidate virtual page number exists in the page table cache, where the first candidate virtual page number is any one of the plurality of candidate virtual page numbers. If the page table entry corresponding to the first candidate virtual page number does not exist in the page table cache, the processor determines that the target virtual page number is not found in the page table cache. Then, the processor performs the foregoing step of looking up, from the memory page table, the page table entry in which the target virtual page number is included.

In an implementation, an implementation process in which the processor determines the plurality of candidate virtual page numbers based on the merging threshold and the target virtual page number is: determining that values of a j^{th}-to-last bit to a leftmost bit in a j^{th} candidate virtual page number included in the plurality of candidate virtual page numbers are equal to values of a j^{th}-to-last bit to the leftmost bit in the target virtual page number, where j∈[1, X], and X represents the merging threshold; and when j>1, determining that values of a 0^{th}-to-last bit to a (j-2)^{th}-to-last bit in the j^{th} candidate virtual page number are all a first value, and a value of a (j-1)^{th}-to-last bit is a second value; or when j=1, determining that a value of a (j-1)^{th}-to-last bit in the j^{th} candidate virtual page number is a second value.

The example in which the first value is 0 and the second value is 1 is used. Assuming that the target virtual page number is 0b00000110 (that is, Ob110) in FIG. 5, and the merging threshold X is equal to 8, it indicates that the maximum quantity of entries that can be merged in one merge is that 2⁸=512. The processor can determine eight candidate virtual page numbers in the foregoing implementation, which are respectively 0b111, 0b110, 0b100, 0b1000, 0b10000, 0b100000, 0b1000000, and 0b10000000. The eight candidate virtual page numbers are in one-to-one correspondence with eight values of j, and the eight values may be considered as eight parameter values.

It should be understood that, during address translation, if the TLB stores a cache table entry obtained through merging, because a virtual page number in the cache table entry is a merged virtual page number, and the processor does not know a quantity of merged entries corresponding to the cache table entry in this case, the processor needs to first generate, based on the merging threshold, a candidate virtual page number corresponding to any possible quantity of merged entries, to obtain a plurality of candidate virtual page numbers, and then, queries whether a candidate virtual page number can be found in the TLB. A plurality of values of j indicate a plurality of possible quantities of merged entries.

A specific implementation of determining the candidate virtual page number is consistent with the foregoing specific implementation of determining the merged virtual page number. For example, the merged virtual page number is specifically determined by first setting VPN' to be equal to Requested VPN, and then setting VPN'[x-2:0] to be equal to 0 and VPN'[x-1] to be equal to 1. In this case, the candidate virtual page number is also determined by first setting Possible VPN' to be equal to Requested VPN, and then setting Possible VPN'[j-2:0] to be equal to 0 and Possible VPN'[j-1] to be equal to 1. Possible VPN' represents the candidate virtual page number.

It can be learned from the foregoing descriptions that each of the plurality of candidate virtual page numbers corresponds to a parameter value, and the parameter value corresponding to each candidate virtual page number indicates a quantity of merged entries corresponding to the corresponding candidate virtual page number. In view of this, after the processor queries whether the page table entry corresponding to the first candidate virtual page number exists in the page table cache, if the page table entry corresponding to the first candidate virtual page number exists in the page table cache, indicating TLB hit, the processor determines, as the target parameter value, a parameter value corresponding to the first candidate virtual page number. Then, the processor determines the base virtual page number based on the target parameter value and the target virtual page number, where the base virtual page number is the smallest virtual page number in the N virtual page numbers. The processor determines the target physical page number based on the base physical page number, the target virtual page number, and the base virtual page number, that is, translates the real physical page number. For a specific implementation, refer to the foregoing related descriptions. Details are not repeated herein.

This embodiment of this application provides an example of pseudocode for performing address translation by the processor according to this solution, as shown below. In the pseudocode, VPN represents a to-be-translated target virtual page number, and Entries represents entries in the TLB, where each entry includes one virtual page number and one tag bit M. VPN_p represents the candidate virtual page number, X represents the merging threshold, VPN_base represents the base virtual page number, PPN_base represents the base physical page number, and PPN represents the translated target physical page number.

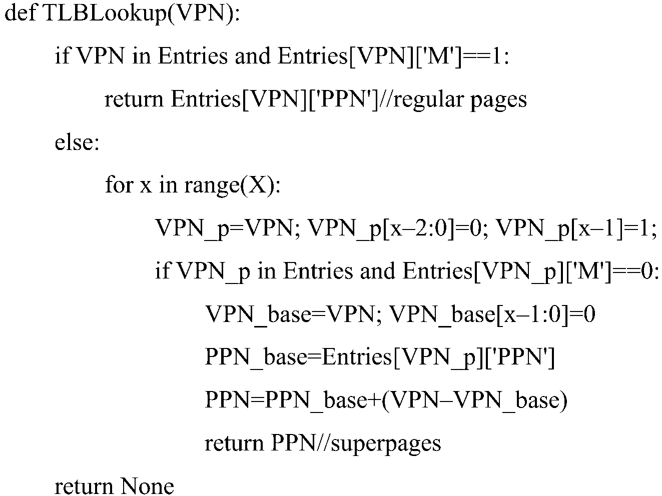

It can be learned from the foregoing embodiments that, when N=2^{x}, and both the base physical page number and the base virtual page number are exactly divisible by N, a series of operations are performed by first setting PPN' to be equal to Base PPN, and then setting PPN'[x-2:0] to be equal to 0 and PPN'[x-1] to be equal to 1; setting M to be equal to 0, indicating the mergeable entry, and setting M to be equal to 1, indicating a non-mergeable entry; first setting VPN' to be equal to Requested VPN, and then setting VPN'[x-2:0] to be equal to 0 and VPN'[x-1] to be equal to 1; first setting Base VPN to be equal to Requested VPN, and then setting Base VPN[x-1:0] to be equal to 0; and the like, so that a storage space required by the page table entries cannot be increased, and difficulties of merging the page table entries and subsequently deriving the real physical page number can be further reduced.

The foregoing describes an implementation process in which the processor creates the large page from the source. Optionally, during specific implementation, the processor may also discover mergeable page table entries (that is, meet the merging condition) by scanning the memory page table, and set the mergeable page table entries as the mergeable entries, to merge these page table entries into a third cache table entry during address translation on a virtual page number in any one of the page table entries that are set as the mergeable entries, and store the third cache table entry in the page table cache.

The processor may periodically scan the memory page table by using the OS, or scan the memory page table under event triggering. The processor may set, in a manner with which the foregoing principle of generating the N page table entries is consistent, a scanned mergeable page table entry as a mergeable entry. For example, the processor modifies a tag bit in the mergeable page table entry from the second value to the first value, and modifies all physical page numbers in the mergeable page table entry to a same reference physical page number. If the tag bit is the second value, it indicates that a corresponding page table entry is not set as a mergeable entry. If the tag bit is the first value, it indicates that a corresponding page table entry is set as a mergeable entry. A specific implementation is similar to the foregoing implementation of generating the N page table entries. Details are not described herein again.

It should be noted that, more merged table entries can be obtained in a manner in which the processor actively creates the large page for the process from the source than a manner in which the processor discovers the mergeable page table entry by passively scanning the memory page table, thereby significantly increasing a TLB hit rate. In short, an effect of actively creating the large page is better than that of passively discovering the mergeable page.

In addition, this embodiment of this application further provides a method for updating the cache table entry obtained through merging. This is described below.

The N page table entries are used as an example. If a page table entry in the N page table entries changes, the processor deletes the first cache table entry in the page table cache based on the changed page table entry, and determines whether M mergeable page table entries still exist in the N page table entries, where M is a positive integer greater than 2 and less than N. If determining that the M mergeable page table entries still exist in the N page table entries, the processor merges the M page table entries into a second cache table entry, and stores the second cache table entry in the page table cache.

When a virtual page number in the N virtual page numbers is swapped out (swapped out), or in another possible case, the page table entry in the N page table entries changes. In this case, the N page table entries have not met the merging condition, and the merged large page needs to be split. Therefore, the processor needs to delete the first cache table entry in the page table cache, deletes a page table entry in which the virtual page number that is swapped out of the N page table entries is included, and sets the other page table entries in the N page table entries to non-mergeable entries, for example, modifies tag bits in the other page table entries from first values to second values.

Optionally, the processor may further determine, based on the merging condition, whether the M mergeable page table entries still exist in the other page table entries. If the M mergeable page table entries still exist in the other page table entries, the processor merges the M page table entries into the second cache table entry in the specific implementation described above, and stores the second cache table entry in the page table cache.

Optionally, the processor further stores, in the page table cache, page table entries other than the M page table entries in the other page table entries, and these page table entries are non-mergeable page table entries.

The following explains and describes this solution by using examples with reference to Example 1 to Example 3.

**Example 1:** A smallest page of 4 KB, a third-level page table, and merging of four pages are used as an example, with reference to FIG. 5 to FIG. 8 for understanding.

Refer to FIG. 5. An OS creates or discovers, by scanning a memory page table, mergeable four pages, and sets, to mergeable entries, four page table entries corresponding to the four pages. The four page table entries meet a merging condition, and the merging condition includes the first sub-condition to the fourth sub-condition described above. Four virtual page numbers included in the four page table entries are respectively 0b00000100, Ob00000101, 0b00000110, and 0b00000111, and corresponding four physical page numbers are respectively 0b00001000, 0b00001001, 0b00001010, and 0b00001011. Before the four page table entries are set as the mergeable entries, values of tag bits M in the four page table entries are 1, indicating that the four page table entries have not been set as the mergeable entries. After the four page table entries are set as the mergeable entries, the values of tag bits M in the four page table entries are 0, indicating that the four page table entries have been set as the mergeable entries, and the physical page numbers in the four page table entries are all modified to a same reference physical page number, where the reference physical page number is 0b00001010. In addition, 0b00000100 in the four virtual page numbers is a base virtual page number, and 0b00001000 in the four physical page numbers is a base physical page number.

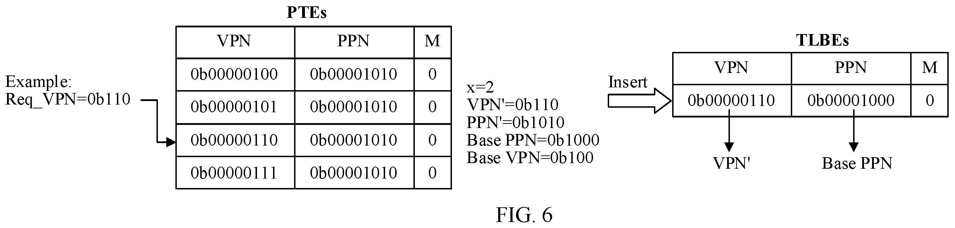

Refer to FIG. 6. An example in which a target virtual page number Requested VPN (Req_VPN) is equal to 0b110 is used. An MMU first queries a TLB, and determines that the TLB is not found (both the target virtual page number and a candidate virtual page number are not found). For a specific implementation process, refer to the foregoing descriptions. Details are not described herein again. Then, the MMU finds a corresponding page table entry from a memory page table based on Requested VPN. Because a tag bit M in the page table entry is equal to 0, it indicates that the page table entry is a mergeable entry. Therefore, the MMU determines, by counting a quantity of bits of 0, that a target parameter value x is equal to 2 (for a specific implementation, refer to the foregoing descriptions), derives, based on x and a reference physical page number PPN' in the page table entry, that a base physical page number Base PPN is equal to 0b1000, and derives, based on x and Requested VPN, that a base virtual page number Base VPN is equal to 0b100. Then, the MMU derives that a target physical page number Real PPN is equal to Base PPN+(Requested VPN-Base VPN), 0b1000+(0b110-0b100), or 0b1010. A TLBE in FIG. 6 represents an entry in the TLB.

After deriving the base physical page number, the MMU further determines, based on the base virtual page number and x, that a merged virtual page number VPN' is equal to 0b00000110, and stores a first cache table entry in a page table cache. The first cache table entry includes the merged virtual page number, the base physical page number, and a tag bit. A value of the tag bit in the first cache table entry is 0, indicating that the first cache table entry is a merged entry.

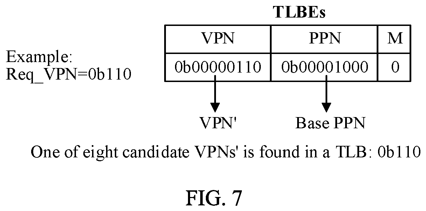

Refer to FIG. 7. During subsequent address translation, the example in which the target virtual page number Requested VPN is equal to 0b110 is still used. An MMU first queries, from a TLB, a cache table entry in which Requested VPN is included, and determines that Requested VPN is not found in the TLB. Then, the MMU generates eight candidate virtual page numbers possible VPN', that is, [0b111, 0b110, 0b100, 0b1000, 0b10000, 0b100000, 0b1000000, 0b10000000], based on Requested VPN and a merging threshold (X=8). The MMU sequentially queries each candidate virtual page number, and finally finds that the TLB stores a first cache table entry in which the candidate virtual page number 0b110 is included.

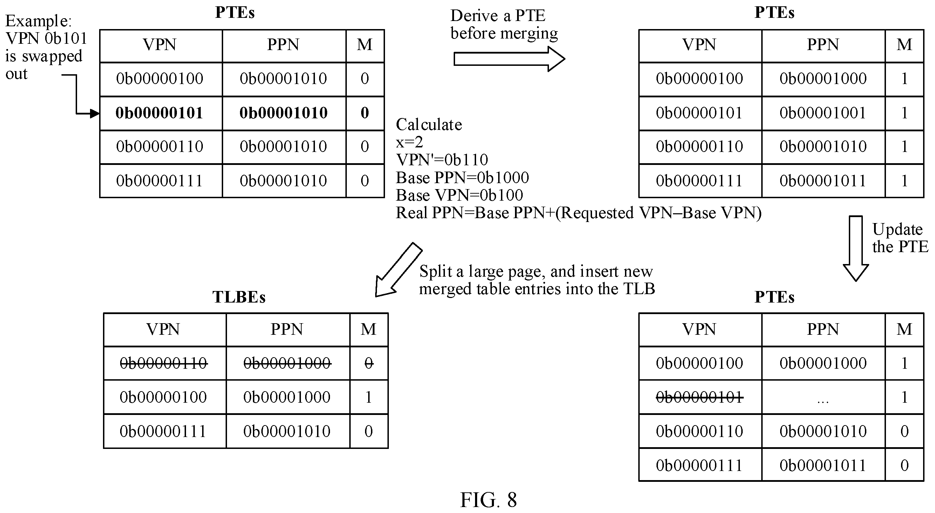

Refer to FIG. 8. When a virtual page number Ob101 is swapped out, an OS needs to split a large page corresponding to a first cache table entry. Specifically, the OS deletes the first cache table entry, modifies, to 1, tag bits of four corresponding page table entries in a memory page table, and deletes a page table entry in which the virtual page number 0b101 is included. If the OS finds that two page table entries in which virtual page numbers 0b110 and 0b111 are located can still be merged, the OS merges the two page table entries in the foregoing manner. Specifically, the OS modifies tag bits in the two page table entries in the memory page table to 0, modifies all physical page numbers in the two page table entries to reference physical page numbers 0b1011, and re-determines base physical page numbers and a merged virtual page number that correspond to the two page table entries. The OS inserts a second cache table entry and a fourth cache table entry into a TLB. The second cache table entry is a cache table entry obtained by merging the two page table entries, the second cache table entry stores a correspondence between the re-determined merged virtual page number 0b00000111 and the re-determined base physical page numbers 0b00001010, and a tag bit in the second cache table entry is 0. The fourth cache table entry is a page table entry that cannot be merged and that is other than the two page table entries in the four page table entries. The fourth cache table entry stores a correspondence between a virtual page number 0b00000100 and a physical page number 0b00001000, and a tag bit in the fourth cache table entry is 1.

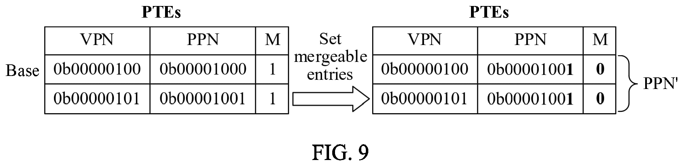

**Example 2:** A smallest page of 4 KB, a second-level page table, and merging of two pages are used as an example, with reference to FIG. 9 to FIG. 12 for understanding.

Refer to FIG. 9. An OS creates or discovers, by scanning a memory page table, mergeable two pages, and sets, to mergeable entries, two page table entries corresponding to the two pages. The two page table entries meet a merging condition, and the merging condition includes the first sub-condition to the fourth sub-condition described above. Two virtual page numbers included in the two page table entries are respectively 0b00000100 and 0b00000101, and corresponding two physical page numbers are respectively 0b00001000 and 0b00001001. Before the two page table entries are set as the mergeable entries, values of tag bits M in the two page table entries are 1, indicating that the two page table entries have not been set as the mergeable entries. After the two page table entries are set as the mergeable entries, the values of tag bits M in the two page table entries are 0, indicating that the two page table entries have been set as the mergeable entries, and the physical page numbers in the two page table entries are both modified to a same reference physical page number, where the reference physical page number is 0b00001001. In addition, 0b00000100 in the two virtual page numbers is a base virtual page number, and 0b00001000 in the two physical page numbers is a base physical page number.

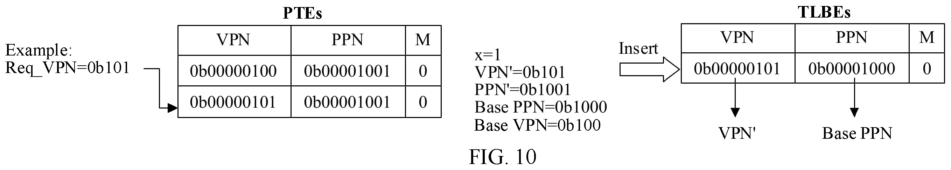

Refer to FIG. 10. An example in which a target virtual page number Requested VPN is equal to 0b101 is used. An MMU first queries a TLB, and determines that the TLB is not found (both the target virtual page number and a candidate virtual page number are not found). For a specific implementation process, refer to the foregoing descriptions. Details are not described herein again. Then, the MMU finds a corresponding page table entry from a memory page table based on Requested VPN. Because a tag bit M in the page table entry is equal to 0, it indicates that the page table entry is a mergeable entry. Therefore, the MMU determines, by counting a quantity of bits of 0, that a target parameter value x is equal to 1 (for a specific implementation, refer to the foregoing descriptions), derives, based on x and a reference physical page number PPN' in the page table entry, that a base physical page number Base PPN is equal to 0b1000, and derives, based on x and Requested VPN, that a base virtual page number Base VPN is equal to 0b100. Then, the MMU derives that a target physical page number Real PPN is equal to Base PPN+(Requested VPN-Base VPN), 0b1000+(0b101-0b100), or 0b1001.

After deriving the base physical page number, the MMU further determines, based on the base virtual page number and x, that a merged virtual page number VPN' is equal to 0b00000101, and stores a first cache table entry in a page table cache. The first cache table entry includes the merged virtual page number, the base physical page number, and a tag bit. A value of the tag bit in the first cache table entry is 0, indicating that the first cache table entry is a merged entry.

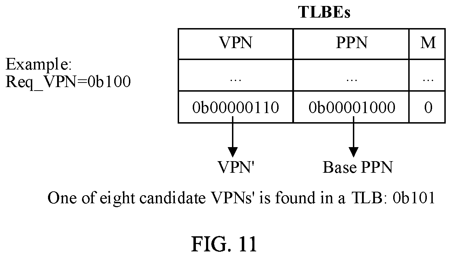

Refer to FIG. 11. During subsequent address translation, an example in which Requested VPN is equal to 0b100 is used. An MMU first queries, from a TLB, a cache table entry in which Requested VPN is included, and determines that Requested VPN is not found in the TLB. Then, the MMU generates eight candidate virtual page numbers possible VPN', that is, [0b101, 0b110, 0b100, 0b1000, 0b10000, 0b100000, 0b1000000, 0b10000000], based on Requested VPN and a merging threshold (X=8). The MMU sequentially queries each candidate virtual page number, and finally finds that the TLB stores a first cache table entry in which the candidate virtual page number 0b101 is included.

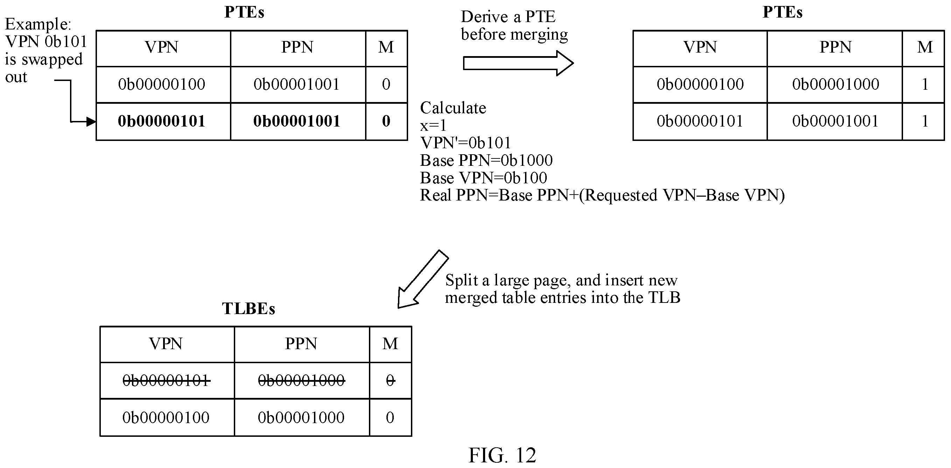

Refer to FIG. 12. When a virtual page number 0b101 is swapped out, an OS needs to split a large page corresponding to a first cache table entry. Specifically, the OS deletes the first cache table entry, modifies, to 1, tag bits of two corresponding page table entries in a memory page table, and deletes a page table entry in which the virtual page number 0b101 is included. If finding that the other page table entry cannot be further merged, the OS determines, based on the other page table entry, a real physical page number 0b1001 corresponding to a virtual page number in the page table entry, and caches a fourth cache table entry in a TLB. The fourth cache table entry stores a correspondence between a virtual page number 0b00000100 and a physical page number 0b00001001, and a tag bit in the fourth cache table entry is 1.

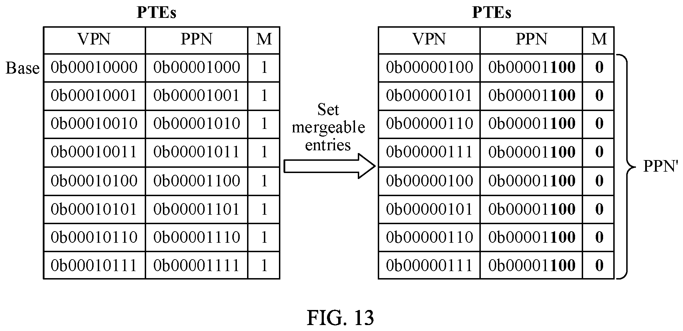

**Example 3:** A smallest page of 16 KB, a third-level page table, and merging of eight pages are used as an example, with reference to FIG. 13 to FIG. 16 for understanding.

Refer to FIG. 13. An OS creates or discovers, by scanning a memory page table, mergeable eight pages, and sets, to mergeable entries, eight page table entries corresponding to the eight pages. The eight page table entries meet a merging condition, and the merging condition includes the first sub-condition to the fourth sub-condition described above. Eight virtual page numbers included in the eight page table entries are respectively 0b00010000, 0b000010001, 0b00010010, 0b00010011, 0b00010100, 0b000010101, 0b00010110, and 0b00010111, and corresponding eight physical page numbers are respectively 0b00001000, 0b00001001, 0b00001010, 0b00001011, 0bO0001100, 0b00001101, 0b00001110, and Ob00001111. Before the eight page table entries are set as the mergeable entries, values of tag bits M in the eight page table entries are 1, indicating that the eight page table entries have not been set as the mergeable entries. After the eight page table entries are set as the mergeable entries, the values of tag bits M in the eight page table entries are 0, indicating that the eight page table entries have been set as the mergeable entries, and the physical page numbers in the eight page table entries are all modified to a same reference physical page number, where the reference physical page number is 0b00001100. In addition, 0b00010000 in the eight virtual page numbers is a base virtual page number, and 0b00001000 in the eight physical page numbers is a base physical page number.

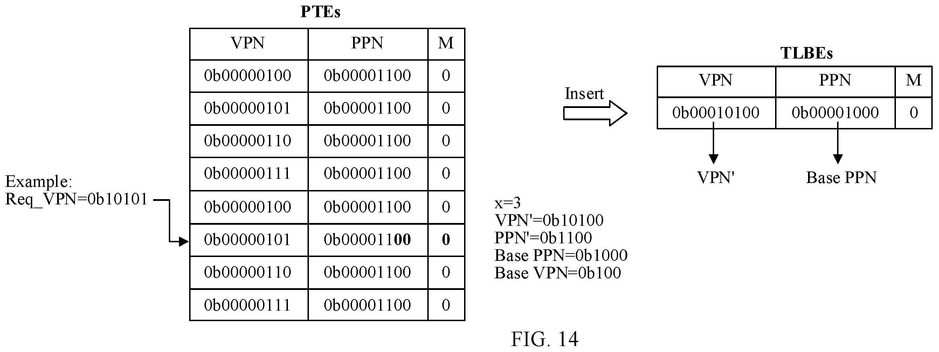

Refer to FIG. 14. An example in which a target virtual page number Requested VPN is equal to 0b10101 is used. An MMU first queries a TLB, and determines that the TLB is not found (both the target virtual page number and a candidate virtual page number are not found). For a specific implementation process, refer to the foregoing descriptions. Details are not described herein again. Then, the MMU finds a corresponding page table entry from a memory page table based on Requested VPN. Because a tag bit M in the page table entry is equal to 0, it indicates that the page table entry is a mergeable entry. Therefore, the MMU determines, by counting a quantity of bits of 0, that a target parameter value x is equal to 3 (for a specific implementation, refer to the foregoing descriptions), derives, based on x and a reference physical page number PPN' in the page table entry, that a base physical page number Base PPN is equal to 0b1000, and derives, based on x and Requested VPN, that a base virtual page number Base VPN is equal to 0b10000. Then, the MMU derives that a target physical page number Real PPN is equal to Base PPN+(Requested VPN-Base VPN), that is, 0b1000+(0b10101-0b10000) or 0b1101.

After deriving the base physical page number, the MMU further determines, based on the base virtual page number and x, that a merged virtual page number VPN' is equal to 0b00010100, and stores a first cache table entry in a page table cache. The first cache table entry includes the merged virtual page number, the base physical page number, and a tag bit. A value of the tag bit in the first cache table entry is 0, indicating that the first cache table entry is a merged entry.

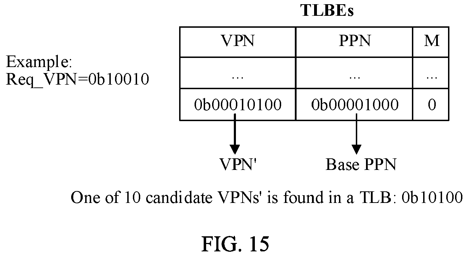

Refer to FIG. 15. During subsequent address translation, an example in which Requested VPN is equal to 0b10010 is used. An MMU first queries, from a TLB, a cache table entry in which Requested VPN is included, and determines that Requested VPN is not found in the TLB. Then, the MMU generates 10 candidate virtual page numbers possible VPN', that is, [0b10001, 0b10010, 0b10100, 0b11000, 0b10000, 0b100000, 0b1000000, 0b10000000, 0b100000000, 0b10000000001, based on Requested VPN and a merging threshold (X=10). The MMU sequentially queries each candidate virtual page number, and finally finds that the TLB stores a first cache table entry in which the candidate virtual page number 0b10100 is included.

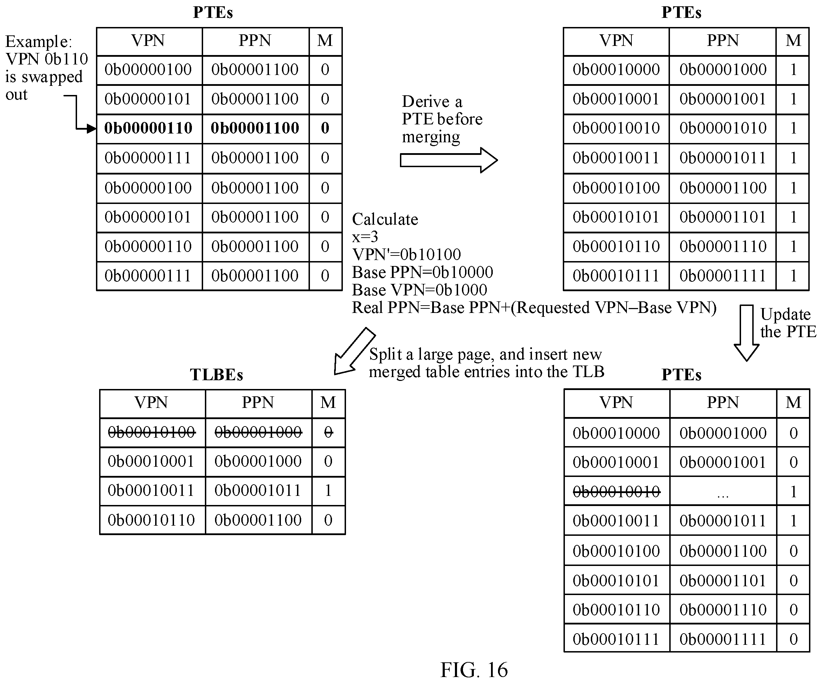

Refer to FIG. 16. When a virtual page number 0b10010 is swapped out, an OS needs to split a large page corresponding to a first cache table entry. Specifically, the OS deletes the first cache table entry, modifies, to 1, tag bits of eight corresponding page table entries in a memory page table, and deletes a page table entry in which the virtual page number 0b10010 is included. If the OS discovers that two page table entries in which virtual page numbers 0b10000 and 0b10001 are located can still be merged, the OS merges the two page table entries in the foregoing manner, and four page table entries in which virtual page numbers 0b00010100, 0b000010101, 0b00010110, and 0b00010111 are located can also be merged. In this case, the OS also merges the two page table entries in the foregoing manner.

Specifically, for the two page table entries that can still be merged, the OS modifies tag bits in the two page table entries in the memory page table to 0, modifies all physical page numbers in the two page table entries to reference physical page numbers 0b1001, and re-determines base physical page numbers and a merged virtual page number that correspond to the two page table entries. The OS inserts a second cache table entry and a fourth cache table entry into a TLB. The second cache table entry is a cache table entry obtained by merging the two page table entries, the second cache table entry stores a correspondence between the re-determined merged virtual page number 0b00010001 and the re-determined base physical page numbers Ob00001000, and a tag bit in the second cache table entry is 0. The fourth cache table entry is a page table entry that cannot be merged and that is in the eight page table entries. The fourth cache table entry stores a correspondence between a virtual page number 0b00010011 and a physical page number 0b00001011, and a tag bit in the fourth cache table entry is 1.

For the four page table entries that can still be merged, the OS modifies tag bits in the four page table entries in the memory page table to 0, modifies all physical page numbers in the four page table entries to reference physical page numbers 0b1110, and re-determines base physical page numbers and a merged virtual page number that correspond to the four page table entries. The OS inserts a second cache table entry into a TLB. The second cache table entry is a cache table entry obtained by merging the four page table entries, the second cache table entry stores a correspondence between the re-determined merged virtual page number 0b00010110 and the re-determined base physical page numbers 0b00001100, and a tag bit in the second cache table entry is 0.

In conclusion, in embodiments of this application, a process may apply for a memory page with a specific size as required, where the size of the memory page that is applied for is not limited to a page size of an any-level page table. Correspondingly, a compute device can create, based on the request of the process, a memory page with a corresponding size for the process by merging page table entries, and store, in a TLB, a cache table entry obtained through merging. To be specific, a large memory page is actively created for the process from a source by merging the page table entries, so that a cache table entry in the TLB can cover a plurality of page table entries in a memory page table, to increase a TLB hit rate, reduce PTWs, and reduce memory access latency and memory access overheads.

During specific implementation, the process may apply to an OS for a memory page with a more flexible size through a newly added programming interface. The OS creates the large memory page from the source, and specifically marks a mergeable page table entry when creating a page table entry. In this way, during address translation, an MMU only needs to merge the page table entries based on tag bits. An operation of the MMU is simple, that is, a requirement on a computing capability of hardware is low. In this solution, a merging condition of the page table entries and a page table translation manner between a VPN and a PPN are further specifically designed, so that the MMU and the OS derive a page size and a base physical page number after merging, to obtain base pages forming the large page. In addition, the OS can further split the large page based on a change of a PTE, and automatically insert, into the TLB, a cache table entry obtained through re-merging.

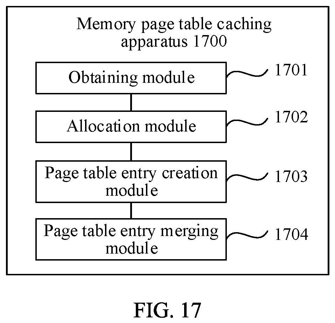

FIG. 17 is a diagram of a structure of a memory page table caching apparatus 1700 according to an embodiment of this application. The apparatus 1700 may be implemented as a part or an entirety of a compute device by using software, hardware, or a combination thereof, and the compute device may be the compute device shown in FIG. 2. For example, the apparatus may be a part or an entirety of a processor, and the processor may be the processor shown in FIG. 3. Refer to FIG. 17. The apparatus includes an obtaining module 1701, an allocation module 1702, a page table entry creation module 1703, and a page table entry merging module 1704.

The obtaining module 1701 is configured to obtain a memory request of a target process, where the memory request indicates a target page size, the target page size is greater than a page size of a first-level page table and is less than a page size of a second-level page table, and the first-level page table and the second-level page table are two consecutive levels of page tables.

The allocation module 1702 is configured to allocate N consecutive virtual page numbers and N consecutive physical page numbers to the target process in response to the memory request, where N is not less than a quantity of memory pages required by the target process.

The page table entry creation module 1703 is configured to create N page table entries in a memory page table based on the N physical page numbers and the N virtual page numbers, where the N page table entries represent a mapping relationship between the N virtual page numbers and N base pages, the N base pages are N physical pages that are in one-to-one correspondence with the N physical page numbers, and a size of the base page is equal to the page size of the first-level page table.

The page table entry merging module 1704 is configured to: merge the N page table entries into a first cache table entry, and store the first cache table entry in a page table cache.

Optionally, the allocation module 1702 includes:
a first determining submodule, configured to determine a value of N based on the target page size and the size of the base page;
a second determining submodule, configured to: determine the N consecutive physical page numbers from unused physical page numbers based on the value of N, and determine the N consecutive virtual page numbers based on an unused virtual address space; and
an allocation submodule, configured to allocate the determined N physical page numbers and N virtual page numbers to the target process.

Optionally, the page table entry creation module 1703 includes:
a third determining submodule, configured to determine a smallest physical page number in the N physical page numbers as a base physical page number;
a generation submodule, configured to generate a reference physical page number based on the base physical page number; and
a creation submodule, configured to create the N page table entries in the memory page table, where each of the N page table entries includes one of the N virtual page numbers, the reference physical page number, and a tag bit, and the tag bit indicates that a corresponding page table entry is a mergeable entry.

Optionally, N=2^{x}, x is a positive integer, and the base physical page number is exactly divisible by N.

The generation submodule is specifically configured to:
determine that, in the reference physical page number, values of an x^{th}-to-last bit to a leftmost bit are equal to values of an x^{th}-to-last bit to a leftmost bit in the base physical page number, values of a 0^{th}-to-last bit to an (x-2)^{th}-to-last bit are all a first value, and a value of an (x-1)^{th}-to-last bit is a second value.

Optionally, the page table entry merging module 1704 includes:
an obtaining submodule, configured to obtain a memory access request of the target process, where the memory access request includes a target virtual page number, and the target virtual page number is one of the N virtual page numbers; and
a merging submodule, configured to merge the N page table entries into the first cache table entry during determining of a target physical page number corresponding to the target virtual page number.

Optionally, each of the N page table entries includes one of the N virtual page numbers, the N page table entries each further include a same reference physical page number, the reference physical page number is generated based on the base physical page number, and the base physical page number is the smallest physical page number in the N physical page numbers.

The merging submodule is specifically configured to:
during determining of the target physical page number corresponding to the target virtual page number, look up, from the memory page table, a page table entry in which the target virtual page number is included, to obtain a first page table entry;
if the first page table entry is a mergeable entry, determine a target parameter value based on the first page table entry, where the target parameter value indicates the value of N;
generate a merged virtual page number based on the target parameter value and the target virtual page number, and determine the base physical page number based on a reference physical page number in the first page table entry; and
generate the first cache table entry, where the first cache table entry includes the merged virtual page number, the base physical page number, and a tag bit, and the tag bit in the first cache table entry indicates that the first cache table entry is a merged entry.

Optionally, the N page table entries each further include a tag bit whose value is the first value, the value of the (x-1)^{th}-to-last bit in the reference physical page number is the second value, and the values of the 0^{th}-to-last bit to the (x-2)^{th}-to-last bit are all the first value, where N=2^{x}, x is a positive integer, and x represents the target parameter value.

The merging submodule is specifically configured to:
count, starting from a rightmost bit of a first binary character string to left, a quantity of bits whose values are the first value, until a 1^{st} bit of a non-first value from right to left in the first binary character string is counted, to obtain the target parameter value, where the first binary character string is a binary character string obtained by concatenating an end of the reference physical page number with the tag bit.

Optionally, the merging submodule is specifically configured to:
determine that, in the merged virtual page number, values of an x^{th}-to-last bit to a leftmost bit are equal to values of an x^{th}-to-last bit to a leftmost bit in the target virtual page number, values of a 0^{th}-to-last bit to an (x-2)^{th}-to-last bit are all the first value, and a value of an (x-1)^{th}-to-last bit is the second value.

The determining the base physical page number based on the reference physical page number in the first page table entry includes:
determining that, in the base physical page number, the values of the x^{th}-to-last bit to the leftmost bit are equal to the values of the x^{th}-to-last bit to the leftmost bit in the reference physical page number, and values of a 0^{th}-to-last bit to an (x-1)^{th}-to-last bit are all the first value.

Optionally, the merging submodule is further specifically configured to:
after determining the base physical page number based on the reference physical page number in the first page table entry, determine a base virtual page number based on the target parameter value and the target virtual page number, where the base virtual page number is a smallest virtual page number in the N virtual page numbers; and
determine the target physical page number based on the base physical page number, the target virtual page number, and the base virtual page number.

Optionally, the merging submodule is further specifically configured to:
before looking up, from the memory page table, the page table entry in which the target virtual page number is included, query the page table cache based on the target virtual page number, to determine whether the target virtual page number is found in the page table cache; and
if the target virtual page number is not found in the page table cache, perform a step of looking up, from the memory page table, the page table entry in which the target virtual page number is included.

Optionally, the merging submodule is specifically configured to:
query, from the page table cache, the page table entry in which the target virtual page number is included;
if the page table entry in which the target virtual page number is included is not found in the page table cache, determine a plurality of candidate virtual page numbers based on a merging threshold and the target virtual page number, where the merging threshold indicates a maximum quantity of page table entries that can be merged in one merge;
query whether a page table entry corresponding to a first candidate virtual page number exists in the page table cache, where the first candidate virtual page number is any one of the plurality of candidate virtual page numbers; and
if the page table entry corresponding to the first candidate virtual page number does not exist in the page table cache, determine that the target virtual page number is not found in the page table cache.

Optionally, the merging submodule is specifically configured to:
determine that values of a j^{th}-to-last bit to a leftmost bit in a j^{th} candidate virtual page number included in the plurality of candidate virtual page numbers are equal to values of a j^{th}-to-last bit to the leftmost bit in the target virtual page number, where j∈[1, X], and X represents the merging threshold; and
when j>1, determine that values of a 0^{th}-to-last bit to a (j-2)^{th}-to-last bit in the j^{th} candidate virtual page number are all a first value, and a value of a (j-1)^{th}-to-last bit is a second value; or
when j=1, determine that a value of a (j-1)^{th}-to-last bit in the j^{th} candidate virtual page number is a second value.

Optionally, each of the plurality of candidate virtual page numbers corresponds to a parameter value, and the parameter value corresponding to each candidate virtual page number indicates a quantity of merged entries corresponding to the corresponding candidate virtual page number.

The merging submodule is further specifically configured to:
after querying whether the page table entry corresponding to the first candidate virtual page number exists in the page table cache, if the page table entry corresponding to the first candidate virtual page number exists in the page table cache, determine, as the target parameter value, a parameter value corresponding to the first candidate virtual page number;
determine the base virtual page number based on the target parameter value and the target virtual page number, where the base virtual page number is the smallest virtual page number in the N virtual page numbers; and
determine the target physical page number based on the base physical page number, the target virtual page number, and the base virtual page number.

Optionally, N=2^{x}, x is a positive integer, and the base virtual page number is exactly divisible by N.

The merging submodule is specifically configured to:
determine that, in the base virtual page number, values of an x^{th}-to-last bit to a leftmost bit are equal to the values of the x^{th}-to-last bit to the leftmost bit in the target virtual page number, and values of a 0^{th}-to-last bit to an (x-1)^{th}-to-last bit are all the first value, where x is equal to the target parameter value.

Optionally, the merging submodule is specifically configured to:
determine a difference between the target virtual page number and the base virtual page number; and
determine a sum of the difference and the base physical page number as the target physical page number.

Optionally, the first value is 0, and the second value is 1.

Optionally, the apparatus 1700 further includes:
a cache table entry deletion module, configured to: if a page table entry in the N page table entries changes, delete the first cache table entry in the page table cache based on the changed page table entry, and determine whether M mergeable page table entries still exist in the N page table entries, where M is a positive integer greater than 2 and less than N; and
a cache table entry changing module, configured to: if determining that the M mergeable page table entries still exist in the N page table entries, merge the M page table entries into a second cache table entry, and store the second cache table entry in the page table cache.

Optionally, read/write attributes of the N base pages are the same.

In embodiments of this application, a process may apply for a memory page with a specific size as required, where the size of the memory page that is applied for is not limited to a page size of an any-level page table. Correspondingly, a compute device can create, based on the request of the process, a memory page with a corresponding size for the process by merging page table entries, and store, in a TLB, a cache table entry obtained through merging. To be specific, a large memory page is actively created for the process from a source by merging the page table entries, so that a cache table entry in the TLB can cover a plurality of page table entries in a memory page table, to increase a TLB hit rate, reduce PTWs, and reduce memory access latency and memory access overheads.

It should be noted that, when the memory page table caching apparatus provided in the foregoing embodiment caches the memory page table, division of the foregoing functional modules is only used as an example for description. In actual application, the foregoing functions may be allocated to different functional modules for completion as required, that is, an internal structure of the apparatus is divided into different functional modules, to complete all or a part of the functions described above. In addition, the memory page table caching apparatus provided in the foregoing embodiment and the memory page table caching method embodiments belong to a same concept. For a specific implementation process thereof, refer to the method embodiments. Details are not described herein again.

All or a part of the foregoing embodiments may be implemented by software, hardware, firmware, or any combination thereof. When the software is used to implement embodiments, all or a part of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, like a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state disk (solid-state disk, SSD)), or the like. It should be noted that the computer-readable storage medium mentioned in embodiments of this application may be a non-volatile storage medium, in other words, may be a non-transitory storage medium.

It should be understood that "at least one" mentioned in this specification means one or more, and "a plurality of" means two or more. In descriptions of embodiments of this application, unless otherwise specified, "/" indicates "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, for ease of clearly describing the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals mentioned in embodiments of this application are used under authorization by the user or full authorization by all parties, and collection, use, and processing of related data need to conform to related laws, regulations, and standards of related countries and regions.

The foregoing descriptions are merely embodiments provided in this application, but are not intended to limit this application. Any modification, equivalent replacement, or improvement made without departing from the spirit and principle of this application shall fall within the protection scope of this application.

## Claims

1. A memory page table caching method, wherein the method comprises:
obtaining a memory request of a target process, wherein the memory request indicates a target page size, the target page size is greater than a page size of a first-level page table and is less than a page size of a second-level page table, and the first-level page table and the second-level page table are two consecutive levels of page tables;
allocating N consecutive virtual page numbers and N consecutive physical page numbers to the target process in response to the memory request, wherein N is not less than a quantity of memory pages required by the target process;
creating N page table entries in a memory page table based on the N physical page numbers and the N virtual page numbers, wherein the N page table entries represent a mapping relationship between the N virtual page numbers and N base pages, the N base pages are N physical pages that are in one-to-one correspondence with the N physical page numbers, and a size of the base page is equal to the page size of the first-level page table; and
merging the N page table entries into a first cache table entry, and storing the first cache table entry in a page table cache.

2. The method according to claim 1, wherein the allocating the N consecutive virtual page numbers and the N consecutive physical page numbers to the target process comprises:
determining a value of N based on the target page size and the size of the base page;
determining the N consecutive physical page numbers from unused physical page numbers based on the value of N, and determining the N consecutive virtual page numbers based on an unused virtual address space; and
allocating the determined N physical page numbers and N virtual page numbers to the target process.

3. The method according to claim 1 or 2, wherein the creating the N page table entries in the memory page table based on the N physical page numbers and the N virtual page numbers comprises:
determining a smallest physical page number in the N physical page numbers as a base physical page number;
generating a reference physical page number based on the base physical page number; and
creating the N page table entries in the memory page table, wherein each of the N page table entries comprises one of the N virtual page numbers, the reference physical page number, and a tag bit, and the tag bit indicates that a corresponding page table entry is a mergeable entry.

4. The method according to claim 3, wherein N=2^{x}, x is a positive integer, and the base physical page number is exactly divisible by N; and
the generating the reference physical page number based on the base physical page number comprises:
determining that, in the reference physical page number, values of an x^{th}-to-last bit to a leftmost bit are equal to values of an x^{th}-to-last bit to a leftmost bit in the base physical page number, values of a 0^{th}-to-last bit to an (x-2)^{th}-to-last bit are all a first value, and a value of an (x-1)^{th}-to-last bit is a second value.

5. The method according to any one of claims 1 to 4, wherein the merging the N page table entries into the first cache table entry comprises:
obtaining a memory access request of the target process, wherein the memory access request comprises a target virtual page number, and the target virtual page number is one of the N virtual page numbers; and
merging the N page table entries into the first cache table entry during determining of a target physical page number corresponding to the target virtual page number.

6. The method according to claim 5, wherein each of the N page table entries comprises one of the N virtual page numbers, the N page table entries each further comprise a same reference physical page number, the reference physical page number is generated based on the base physical page number, and the base physical page number is the smallest physical page number in the N physical page numbers; and
the merging the N page table entries into the first cache table entry during determining of the target physical page number corresponding to the target virtual page number comprises:
during determining of the target physical page number corresponding to the target virtual page number, looking up, from the memory page table, a page table entry in which the target virtual page number is comprised, to obtain a first page table entry;
if the first page table entry is a mergeable entry, determining a target parameter value based on the first page table entry, wherein the target parameter value indicates the value of N;
generating a merged virtual page number based on the target parameter value and the target virtual page number, and determining the base physical page number based on the reference physical page number in the first page table entry; and
generating the first cache table entry, wherein the first cache table entry comprises the merged virtual page number, the base physical page number, and a tag bit, and the tag bit in the first cache table entry indicates that the first cache table entry is a merged entry.

7. The method according to claim 6, wherein the N page table entries each further comprise a tag bit whose value is the first value, the value of the (x-1)^{th}-to-last bit in the reference physical page number is the second value, and the values of the 0^{th}-to-last bit to the (x-2)^{th}-to-last bit are all the first value, wherein N=2^{x}, x is a positive integer, and x represents the target parameter value; and
the determining the target parameter value based on the first page table entry comprises:
counting, starting from a rightmost bit of a first binary character string to left, a quantity of bits whose values are the first value, until a 1^{st} bit of a non-first value from right to left in the first binary character string is counted, to obtain the target parameter value, wherein the first binary character string is a binary character string obtained by concatenating an end of the reference physical page number with the tag bit.

8. The method according to claim 7, wherein the generating the merged virtual page number based on the target parameter value and the target virtual page number comprises:
determining that, in the merged virtual page number, values of an x^{th}-to-last bit to a leftmost bit are equal to values of an x^{th}-to-last bit to a leftmost bit in the target virtual page number, values of a 0^{th}-to-last bit to an (x-2)^{th}-to-last bit are all the first value, and a value of an (x-1)^{th}-to-last bit is the second value; and
the determining the base physical page number based on the reference physical page number in the first page table entry comprises:
determining that, in the base physical page number, the values of the x^{th}-to-last bit to the leftmost bit are equal to the values of the x^{th}-to-last bit to the leftmost bit in the reference physical page number, and values of a 0^{th}-to-last bit to an (x-1)^{th}-to-last bit are all the first value.

9. The method according to any one of claims 6 to 8, wherein after the determining the base physical page number based on the reference physical page number in the first page table entry, the method further comprises:
determining a base virtual page number based on the target parameter value and the target virtual page number, wherein the base virtual page number is a smallest virtual page number in the N virtual page numbers; and
determining the target physical page number based on the base physical page number, the target virtual page number, and the base virtual page number.

10. The method according to any one of claims 6 to 9, wherein before the looking up, from the memory page table, the page table entry in which the target virtual page number is comprised, the method further comprises:
querying the page table cache based on the target virtual page number, to determine whether the target virtual page number is found in the page table cache; and
if the target virtual page number is not found in the page table cache, performing a step of the looking up, from the memory page table, the page table entry in which the target virtual page number is comprised.

11. The method according to claim 10, wherein the querying the page table cache based on the target virtual page number, to determine whether the target virtual page number is found in the page table cache comprises:
querying, from the page table cache, the page table entry in which the target virtual page number is comprised;
if the page table entry in which the target virtual page number is comprised is not found in the page table cache, determining a plurality of candidate virtual page numbers based on a merging threshold and the target virtual page number, wherein the merging threshold indicates a maximum quantity of page table entries that can be merged in one merge;
querying whether a page table entry corresponding to a first candidate virtual page number exists in the page table cache, wherein the first candidate virtual page number is any one of the plurality of candidate virtual page numbers; and
if the page table entry corresponding to the first candidate virtual page number does not exist in the page table cache, determining that the target virtual page number is not found in the page table cache.

12. The method according to claim 11, wherein the determining the plurality of candidate virtual page numbers based on the merging threshold and the target virtual page number comprises:
determining that values of a j^{th}-to-last bit to a leftmost bit in a j^{th} candidate virtual page number comprised in the plurality of candidate virtual page numbers are equal to values of a j^{th}-to-last bit to the leftmost bit in the target virtual page number, wherein j∈[1, X], and X represents the merging threshold; and
when j>1, determining that values of a 0^{th}-to-last bit to a (j-2)^{th}-to-last bit in the j^{th} candidate virtual page number are all a first value, and a value of a (j-1)^{th}-to-last bit is a second value; or
when j=1, determining that a value of a (j-1)^{th}-to-last bit in the j^{th} candidate virtual page number is a second value.

13. The method according to claim 11 or 12, wherein each of the plurality of candidate virtual page numbers corresponds to a parameter value, and the parameter value corresponding to each candidate virtual page number indicates a quantity of merged entries corresponding to the corresponding candidate virtual page number; and
after the querying whether the page table entry corresponding to the first candidate virtual page number exists in the page table cache, the method further comprises:
if the page table entry corresponding to the first candidate virtual page number exists in the page table cache, determining, as the target parameter value, a parameter value corresponding to the first candidate virtual page number;
determining the base virtual page number based on the target parameter value and the target virtual page number, wherein the base virtual page number is the smallest virtual page number in the N virtual page numbers; and
determining the target physical page number based on the base physical page number, the target virtual page number, and the base virtual page number.

14. The method according to claim 9 or 13, wherein N=2^{x}, x is a positive integer, and the base virtual page number is exactly divisible by N; and
the determining the base virtual page number based on the target parameter value and the target virtual page number comprises:
determining that, in the base virtual page number, values of an x^{th}-to-last bit to a leftmost bit are equal to the values of the x^{th}-to-last bit to the leftmost bit in the target virtual page number, and values of a 0^{th}-to-last bit to an (x-1)^{th}-to-last bit are all the first value, wherein x is equal to the target parameter value.

15. The method according to claim 9, 13, or 14, wherein the determining the target physical page number based on the base physical page number, the target virtual page number, and the base virtual page number comprises:
determining a difference between the target virtual page number and the base virtual page number; and
determining a sum of the difference and the base physical page number as the target physical page number.

16. The method according to any one of claims 1 to 15, wherein the method further comprises:
if a page table entry in the N page table entries changes, deleting the first cache table entry in the page table cache based on the changed page table entry, and determining whether M mergeable page table entries still exist in the N page table entries, wherein M is a positive integer greater than 2 and less than N; and
if determining that the M mergeable page table entries still exist in the N page table entries, merging the M page table entries into a second cache table entry, and storing the second cache table entry in the page table cache.

17. A memory page table caching apparatus, wherein the apparatus comprises:
an obtaining module, configured to obtain a memory request of a target process, wherein the memory request indicates a target page size, the target page size is greater than a page size of a first-level page table and is less than a page size of a second-level page table, and the first-level page table and the second-level page table are two consecutive levels of page tables;
an allocation module, configured to allocate N consecutive virtual page numbers and N consecutive physical page numbers to the target process in response to the memory request, wherein N is not less than a quantity of memory pages required by the target process;
a page table entry creation module, configured to create N page table entries in a memory page table based on the N physical page numbers and the N virtual page numbers, wherein the N page table entries represent a mapping relationship between the N virtual page numbers and N base pages, the N base pages are N physical pages that are in one-to-one correspondence with the N physical page numbers, and a size of the base page is equal to the page size of the first-level page table; and
a page table entry merging module, configured to: merge the N page table entries into a first cache table entry, and store the first cache table entry in a page table cache.

18. The apparatus according to claim 17, wherein the allocation module comprises:
a first determining submodule, configured to determine a value of N based on the target page size and the size of the base page;
a second determining submodule, configured to: determine the N consecutive physical page numbers from unused physical page numbers based on the value of N, and determine the N consecutive virtual page numbers based on an unused virtual address space; and
an allocation submodule, configured to allocate the determined N physical page numbers and N virtual page numbers to the target process.

19. The apparatus according to claim 17 or 18, wherein the page table entry creation module comprises:
a third determining submodule, configured to determine a smallest physical page number in the N physical page numbers as a base physical page number;
a generation submodule, configured to generate a reference physical page number based on the base physical page number; and
a creation submodule, configured to create the N page table entries in the memory page table, wherein each of the N page table entries comprises one of the N virtual page numbers, the reference physical page number, and a tag bit, and the tag bit indicates that a corresponding page table entry is a mergeable entry.

20. The apparatus according to claim 19, wherein N=2^{x}, x is a positive integer, and the base physical page number is exactly divisible by N; and
the generation submodule is specifically configured to:
determine that, in the reference physical page number, values of an x^{th}-to-last bit to a leftmost bit are equal to values of an x^{th}-to-last bit to a leftmost bit in the base physical page number, values of a 0^{th}-to-last bit to an (x-2)^{th}-to-last bit are all a first value, and a value of an (x-1)^{th}-to-last bit is a second value.

21. The apparatus according to any one of claims 17 to 20, wherein the page table entry merging module comprises:
an obtaining submodule, configured to obtain a memory access request of the target process, wherein the memory access request comprises a target virtual page number, and the target virtual page number is one of the N virtual page numbers; and
a merging submodule, configured to merge the N page table entries into the first cache table entry during determining of a target physical page number corresponding to the target virtual page number.

22. The apparatus according to claim 21, wherein each of the N page table entries comprises one of the N virtual page numbers, the N page table entries each further comprise a same reference physical page number, the reference physical page number is generated based on the base physical page number, and the base physical page number is the smallest physical page number in the N physical page numbers; and
the merging submodule is specifically configured to:
during determining of the target physical page number corresponding to the target virtual page number, look up, from the memory page table, a page table entry in which the target virtual page number is comprised, to obtain a first page table entry;
if the first page table entry is a mergeable entry, determine a target parameter value based on the first page table entry, wherein the target parameter value indicates the value of N;
generate a merged virtual page number based on the target parameter value and the target virtual page number, and determine the base physical page number based on the reference physical page number in the first page table entry; and
generate the first cache table entry, wherein the first cache table entry comprises the merged virtual page number, the base physical page number, and a tag bit, and the tag bit in the first cache table entry indicates that the first cache table entry is a merged entry.

23. The apparatus according to claim 22, wherein the N page table entries each further comprise a tag bit whose value is the first value, the value of the (x-1)^{th}-to-last bit in the reference physical page number is the second value, and the values of the 0^{th}-to-last bit to the (x-2)^{th}-to-last bit are all the first value, wherein N=2^{x}, x is a positive integer, and x represents the target parameter value; and
the merging submodule is specifically configured to:
count, starting from a rightmost bit of a first binary character string to left, a quantity of bits whose values are the first value, until a 1^{st} bit of a non-first value from right to left in the first binary character string is counted, to obtain the target parameter value, wherein the first binary character string is a binary character string obtained by concatenating an end of the reference physical page number with the tag bit.

24. The apparatus according to claim 23, wherein the merging submodule is specifically configured to:
determine that, in the merged virtual page number, values of an x^{th}-to-last bit to a leftmost bit are equal to values of an x^{th}-to-last bit to a leftmost bit in the target virtual page number, values of a 0^{th}-to-last bit to an (x-2)^{th}-to-last bit are all the first value, and a value of an (x-1)^{th}-to-last bit is the second value; and
the determining the base physical page number based on the reference physical page number in the first page table entry comprises:
determining that, in the base physical page number, the values of the x^{th}-to-last bit to the leftmost bit are equal to the values of the x^{th}-to-last bit to the leftmost bit in the reference physical page number, and values of a 0^{th}-to-last bit to an (x-1)^{th}-to-last bit are all the first value.

25. The apparatus according to any one of claims 22 to 24, wherein the merging submodule is further specifically configured to:
after determining the base physical page number based on the reference physical page number in the first page table entry, determine a base virtual page number based on the target parameter value and the target virtual page number, wherein the base virtual page number is a smallest virtual page number in the N virtual page numbers; and
determine the target physical page number based on the base physical page number, the target virtual page number, and the base virtual page number.

26. The apparatus according to any one of claims 22 to 25, wherein the merging submodule is further specifically configured to:
before looking up, from the memory page table, the page table entry in which the target virtual page number is comprised, query the page table cache based on the target virtual page number, to determine whether the target virtual page number is found in the page table cache; and
if the target virtual page number is not found in the page table cache, perform a step of the looking up, from the memory page table, the page table entry in which the target virtual page number is comprised.

27. The apparatus according to claim 26, wherein the merging submodule is specifically configured to:
query, from the page table cache, the page table entry in which the target virtual page number is comprised;
if the page table entry in which the target virtual page number is comprised is not found in the page table cache, determine a plurality of candidate virtual page numbers based on a merging threshold and the target virtual page number, wherein the merging threshold indicates a maximum quantity of page table entries that can be merged in one merge;
query whether a page table entry corresponding to a first candidate virtual page number exists in the page table cache, wherein the first candidate virtual page number is any one of the plurality of candidate virtual page numbers; and
if the page table entry corresponding to the first candidate virtual page number does not exist in the page table cache, determine that the target virtual page number is not found in the page table cache.

28. A compute device, wherein the compute device comprises a processor and a storage, wherein
the storage is configured to store a computer program; and
the processor is configured to execute the computer program, to implement the method according to any one of claims 1 to 16.

29. A computer-readable storage medium, wherein the storage medium stores a computer program, and when the computer program is executed by a processor, steps in the method according to any one of claims 1 to 16 are implemented.

30. A computer program product, wherein the computer program product stores computer instructions, and when the computer instructions are executed by a processor, steps in the method according to any one of claims 1 to 16 are implemented.
